# EUROPEAN PATENT APPLICATION

(11) **EP 4 659 998 A1**
(43) Date of publication of application: **10.12.2025**
(21) Application number: 23920390.4
(22) Date of filing: 08.02.2023
(51) Int. Cl.: B60L 58/13, B60L 3/00, B60R 16/033

(54) **CONTROL METHOD AND DEVICE AND VEHICLE**

(71) Applicant: Shenzhen Yinwang Intelligent Technologies Co., Ltd., Shenzhen, Guangdong 518110 (CN)
(72) Inventor: XIA, Qizhong, Shenzhen, Guangdong 518129 (CN); GAO, Mingying, Shenzhen, Guangdong 518129 (CN); WANG, Jin, Shenzhen, Guangdong 518129 (CN); LI, Minhao, Shenzhen, Guangdong 518129 (CN); WANG, Miao, Shenzhen, Guangdong 518129 (CN); LI, Xiao, Shenzhen, Guangdong 518129 (CN)
(74) Representative: MERH-IP Matias Erny Reichl Hoffmann Patentanwälte PartG mbB
(86) International application number: PCT/CN2023/075023
(87) International publication number: WO 2024/164182

(57) **Abstract**

A control method is provided, and includes: A vehicle obtains information about a camping destination (S 1410). The vehicle controls, based on the information about the camping destination and a state of charge of the vehicle, a vehicle-mounted display to prompt a user with a state of charge corresponding to a return trip, a state of charge corresponding to a mode related to a user rest in a cockpit of the vehicle, and a state of charge corresponding to a mode used for discharging the vehicle (S 1420). The method may be applied to an intelligent vehicle, an electric vehicle, or a range-extended electric vehicle. The user is prompted with state-of-charge allocation information, to facilitate alleviation of battery anxiety of the user during camping, thereby helping improve use experience of the user. A control apparatus and a vehicle are further provided.

## Description

### TECHNICAL FIELD

Embodiments of this application relate to the field of intelligent vehicles, and more specifically, to a control method and apparatus, and a vehicle.

### BACKGROUND

With the development of vehicle intelligence, camping during a road trip on weekends or holidays becomes increasingly common. A user can enjoy user experience brought by intelligent features such as vehicle discharge (for example, camping barbecue and entertainment) and in-vehicle sleep. Currently, a vehicle owner usually has battery anxiety and is worried about consumption on a state of charge of an entire vehicle due to discharge, in-vehicle sleep, and maintenance of an on state of another low-voltage or high-voltage component. As a result, a state of charge of a return trip is insufficient and user experience is affected.

### SUMMARY

This application provides a control method and apparatus, and a vehicle, to facilitate alleviation of battery anxiety of a user during camping, thereby helping improve use experience of the user.

The vehicle in this application is a vehicle in a broad sense, and may be a transportation tool (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in this application.

According to a first aspect, a control method is provided. The method includes: obtaining information about a destination; and controlling, based on the information about the destination and a state of charge (state of charge, SOC) of a vehicle, a prompt apparatus to prompt a user with a state of charge corresponding to a return trip and a state of charge corresponding to a first mode, where the first mode includes a second mode related to a user rest in a cockpit of the vehicle and/or a third mode used for discharging the vehicle.

Based on the foregoing technical solution, the user may be prompted, based on the information about the destination and the state of charge of the vehicle, with the state of charge corresponding to the return trip and the state of charge corresponding to the first mode. In this way, the user is prompted with state-of-charge allocation information, to facilitate alleviation of battery anxiety of the user during camping, thereby helping improve use experience of the user.

In some possible implementations, obtaining the information about the destination includes: obtaining the information about the destination when it is determined that the destination is a camping destination.

In some possible implementations, the state of charge corresponding to the return trip may be a state of charge that needs to be consumed from the destination to a home.

In some possible implementations, the state of charge corresponding to the return trip may be a preset state-of-charge value plus a state of charge that needs to be consumed from the destination to a home. For example, the preset state-of-charge value is 5%.

In some possible implementations, the state of charge corresponding to the first mode may be a state of charge that can be consumed when the first mode runs, or the state of charge corresponding to the first mode may be the state of charge of the vehicle minus the state of charge corresponding to the return trip.

In some possible implementations, the first mode includes the second mode, and the method further includes: controlling the prompt apparatus to prompt the user with a duration in which the second mode can run.

In some possible implementations, the first mode includes the third mode, and the method further includes: controlling the prompt apparatus to prompt the user with information about a remaining available range, where a state of charge corresponding to the remaining available range is a state of charge corresponding to the third mode.

In some possible implementations, the prompt apparatus includes a display apparatus and/or a sound-making apparatus.

With reference to the first aspect, in some implementations of the first aspect, the first mode includes the second mode and the third mode, and controlling, based on the information about the destination and the state of charge of the vehicle, the prompt apparatus to prompt the user with the state of charge corresponding to the return trip and the state of charge corresponding to the first mode includes: controlling, based on the information about the destination, the state of charge of the vehicle, and a historical camping record of the user, the prompt apparatus to prompt the user with the state of charge corresponding to the return trip, the state of charge corresponding to the second mode, and the state of charge corresponding to the third mode.

Based on the foregoing technical solution, with reference to the historical camping record of the user, a possibility that the user adjusts the allocated state of charge corresponding to the second mode and the allocated state of charge corresponding to the third mode again can be reduced, to facilitate avoidance of a complex state-of-charge adjustment operation of the user, thereby helping improve use experience of the user.

In some possible implementations, the historical camping record includes a duration of using the second mode at a camping destination and a duration of using the third mode at the camping destination, or a state of charge consumed when the second mode is used at a camping destination and a state of charge consumed when the third mode is used at the camping destination, in a past period of time (for example, half a year or three months).

With reference to the first aspect, in some implementations of the first aspect, the first mode includes the second mode and the third mode, and the method further includes: when it is detected that the user increases an input of the state of charge corresponding to the second mode, keeping the state of charge corresponding to the return trip unchanged and decreasing the state of charge corresponding to the third mode; or when it is detected that the user increases an input of the state of charge corresponding to the third mode, keeping the state of charge corresponding to the return trip unchanged and decreasing the state of charge corresponding to the second mode.

Based on the foregoing technical solution, when it is ensured that the state of charge corresponding to the return trip remains unchanged, the state of charge corresponding to the second mode and the state of charge corresponding to the third mode may be adjusted based on a state-of-charge adjustment operation of the user, so that reallocated quantities of electricity better meet an intention of the user. In addition, this helps ensure that the state of charge corresponding to the return trip can support the vehicle to return to the home from the destination, thereby avoiding a case in which the vehicle is out of power on passage.

With reference to the first aspect, in some implementations of the first aspect, the method further includes: when it is detected that the user increases an input of the state of charge corresponding to the first mode, decreasing the state of charge corresponding to the return trip; and when the state of charge corresponding to the return trip cannot enable the vehicle to travel to a charging station closest to the destination, controlling the prompt apparatus to inform the user that the state of charge corresponding to the return trip cannot enable the vehicle to travel to the charging station.

Based on the foregoing technical solution, in a process in which the user increases the state of charge corresponding to the first mode, the vehicle may continuously monitor whether the state of charge corresponding to the return trip can enable the vehicle to travel to the charging station closest to the destination. If the state of charge corresponding to the return trip cannot enable the vehicle to travel to the charging station closest to the destination, the prompt apparatus gives a prompt, so that the user learns that the state of charge corresponding to the return trip cannot enable the vehicle to travel to the charging station. This helps reduce battery anxiety of the user and avoid a case in which the vehicle is out of power on passage.

With reference to the first aspect, in some implementations of the first aspect, the first mode includes the second mode and the third mode, and the method further includes: when it is detected that the user adjusts the input of the state of charge corresponding to the return trip, adjusting, based on the historical camping record of the user, the state of charge corresponding to the second mode and/or the state of charge corresponding to the third mode.

Based on the foregoing technical solution, when the user adjusts the state of charge corresponding to the return trip, the vehicle may automatically adjust, based on the historical camping record, the state of charge corresponding to the second mode and/or the state of charge corresponding to the third mode. In this way, the adjusted state of charge corresponding to the second mode and the adjusted state of charge corresponding to the third mode better meet an expectation of the user, to reduce a possibility that the user adjusts the state of charge corresponding to the second mode and the state of charge corresponding to the third mode again and avoid a complex state-of-charge adjustment operation of the user, thereby helping improve use experience of the user.

With reference to the first aspect, in some implementations of the first aspect, the vehicle includes a range extender, the first mode includes the second mode, and the method further includes: when the state of charge corresponding to the second mode cannot enable the second mode to last for a first preset duration, controlling the range extender to generate power.

Based on the foregoing technical solution, when the initially allocated state of charge cannot enable the second mode to last for the first preset duration, a state of charge supplemented by the range extender can enable a continuous running duration of the second mode to reach the first preset duration, to facilitate ensuring of a rest duration of the user in a cockpit, thereby helping improve use experience of the user.

In some possible implementations, the first preset duration may be determined based on the historical camping record of the user.

With reference to the first aspect, in some implementations of the first aspect, controlling the range extender to generate the power includes: before the second mode is enabled, controlling the range extender to generate the power.

Based on the foregoing technical solution, the range extender is controlled to generate the power before the second mode is enabled, to facilitate avoidance of impact of noise generated during power generation performed by the range extender on a rest of the user, thereby helping improve use experience of the user.

With reference to the first aspect, in some implementations of the first aspect, the state of charge corresponding to the second mode is a first state of charge; and the method further includes: when a state of charge consumed in the second mode reaches the first state of charge, exiting the second mode.

Based on the foregoing technical solution, after the state of charge corresponding to the second mode is allocated, the vehicle may monitor the state of charge when the vehicle runs in the second mode. When the state of charge by the second mode reaches a corresponding limit value, the second mode may be automatically exited. In this way, it can be ensured that the state of charge consumed in the second mode does not exceed the limit value allocated to the second mode, to facilitate avoidance of range battery anxiety caused by continuous running in the second mode or prevent the second mode from continuous running and affecting a state of charge that can be consumed in the third mode, thereby helping improve use experience of the user during camping.

With reference to the first aspect, in some implementations of the first aspect, the method further includes: controlling the prompt apparatus to inform the user that the vehicle has exited the second mode; and/or controlling a vehicle window of the vehicle to be opened.

Based on the foregoing technical solution, when the vehicle exits the second mode, the user may be informed that the vehicle has exited the second mode, so that the user knows that the state of charge consumed in the second mode has reached the limit value allocated to the second mode. When the second mode exits, the vehicle may control the vehicle window to be automatically opened, to facilitate air circulation in the vehicle and avoid impact of the exit of the second mode on sleep quality of the user.

With reference to the first aspect, in some implementations of the first aspect, the vehicle includes the range extender, the first mode includes the third mode, and the method further includes: when the state of charge corresponding to the third mode cannot enable the third mode to last for a second preset duration, controlling the range extender to generate the power.

Based on the foregoing technical solution, when the initially allocated state of charge cannot enable the third mode to last for the second preset duration, a state of charge supplemented by the range extender can enable a continuous running duration of the third mode to reach the second preset duration, to facilitate ensuring of a duration of using a discharge mode by the user and ensuring of a state of charge that can be consumed by a power-consuming device, thereby helping improve use experience of the user.

In some possible implementations, the first preset duration may be determined based on the historical camping record of the user.

With reference to the first aspect, in some implementations of the first aspect, the state of charge corresponding to the third mode is a second state of charge, and the method further includes: when a state of charge consumed in the third mode reaches the second state of charge, controlling the vehicle to stop discharging.

Based on the foregoing technical solution, after the state of charge corresponding to the third mode is allocated, the vehicle may monitor the state of charge when the vehicle runs in the third mode. When the corresponding limit value is reached, the vehicle may be controlled to stop discharging, to ensure that the state of charge consumed in the third mode does not exceed the limit value allocated to the third mode. In this way, this helps avoid range battery anxiety caused by continuous running in the third mode or prevent the third mode from continuous running and affecting a state of charge that can be consumed in the second mode, thereby helping improve use experience of the user during camping.

In some possible implementations, the method further includes: before the state of charge consumed in the third mode reaches the second state of charge, sending prompt information to a mobile terminal (for example, a mobile phone) of the user, where the prompt information indicates the state of charge consumed in the third mode and/or a duration in which the third mode can further run.

For example, the duration in which the third mode can further run may be determined by a difference between the state of charge corresponding to the third mode and the state of charge consumed in the third mode and a power of the current power-consuming device.

In some possible implementations, the method further includes: when the difference between the state of charge corresponding to the third mode and the state of charge consumed in the third mode is less than or equal to a preset difference, sending prompt information to a mobile terminal (for example, a mobile phone) of the user, where the prompt information indicates that the state of charge corresponding to the third mode is to be used up and/or that the vehicle is about to stop discharging.

With reference to the first aspect, in some implementations of the first aspect, obtaining the information about the destination includes: obtaining the information about the destination before the vehicle travels to the destination; and controlling, based on the information about the destination and the state of charge of the vehicle, the prompt apparatus to prompt the user with the state of charge corresponding to the return trip and the state of charge corresponding to the first mode includes: controlling, based on the information about the destination and the state of charge of the vehicle, the prompt apparatus to prompt the user with a state of charge corresponding to an outward trip, the state of charge corresponding to the return trip, and the state of charge corresponding to the first mode.

Based on the foregoing technical solution, before arriving at the camping destination, the state of charge corresponding to the outward trip, the state of charge corresponding to the return trip, and the state of charge corresponding to the first mode are planned, to facilitate alleviation of the battery anxiety of the user during camping, thereby helping improve use experience of the user.

According to a second aspect, a control apparatus is provided. The apparatus includes: an obtaining unit, configured to obtain information about a destination; and a control unit, configured to control, based on the information about the destination and a state of charge of a vehicle, a prompt apparatus to prompt a user with a state of charge corresponding to a return trip and a state of charge corresponding to a first mode, where the first mode includes a second mode related to a user rest in a cockpit of the vehicle and/or a third mode used for discharging the vehicle.

With reference to the second aspect, in some implementations of the second aspect, the first mode includes the second mode and the third mode, and the control unit is configured to control, based on the information about the destination, the state of charge of the vehicle, and a historical camping record of the user, the prompt apparatus to prompt the user with the state of charge corresponding to the return trip, a state of charge corresponding to the second mode, and a state of charge corresponding to the third mode.

With reference to the second aspect, in some implementations of the second aspect, the apparatus further includes a detection unit and a state-of-charge adjustment unit. The state-of-charge adjustment unit is configured to: when the detection unit detects that the user adjusts an input of the state of charge corresponding to the return trip, adjust the state of charge corresponding to the first mode; or when the detection unit detects that the user adjusts an input of the state of charge corresponding to the first mode, adjust the state of charge corresponding to the return trip.

With reference to the second aspect, in some implementations of the second aspect, the state-of-charge adjustment unit is configured to: when the detection unit detects that the user increases an input of the state of charge corresponding to the first mode, decrease the state of charge corresponding to the return trip. The control unit is further configured to: when the state of charge corresponding to the return trip cannot enable the vehicle to travel to a charging station closest to the destination, control the prompt apparatus to inform the user that the state of charge corresponding to the return trip cannot enable the vehicle to travel to the charging station.

With reference to the second aspect, in some implementations of the second aspect, the first mode includes the second mode and the third mode, and the state-of-charge adjustment unit is configured to: when the detection unit detects that the user decreases the input of the state of charge corresponding to the return trip, increase, based on the historical camping record of the user, the state of charge corresponding to the second mode and/or the state of charge corresponding to the third mode.

With reference to the second aspect, in some implementations of the second aspect, the vehicle includes a range extender, the first mode includes the second mode, and the control unit is further configured to: when the state of charge corresponding to the second mode cannot enable the second mode to last for a first preset duration, control the range extender to generate power.

With reference to the second aspect, in some implementations of the second aspect, the control unit is configured to: before the second mode is enabled, control the range extender to generate the power.

With reference to the second aspect, in some implementations of the second aspect, the state of charge corresponding to the second mode is a first state of charge; and the control unit is further configured to: when a state of charge consumed in the second mode reaches the first state of charge, exit the second mode.

With reference to the second aspect, in some implementations of the second aspect, the control unit is further configured to: control the prompt apparatus to inform the user that the vehicle has exited the second mode; and/or control a vehicle window of the vehicle to be opened.

With reference to the second aspect, in some implementations of the second aspect, the vehicle includes the range extender, the first mode includes the third mode, and the control unit is further configured to: when the state of charge corresponding to the third mode cannot enable the third mode to last for a second preset duration, control the range extender to generate power.

With reference to the second aspect, in some implementations of the second aspect, the state of charge corresponding to the third mode is a second state of charge, and the control unit is further configured to: when a state of charge consumed in the third mode reaches the second state of charge, control a battery of the vehicle to stop discharging.

With reference to the second aspect, in some implementations of the second aspect, the obtaining unit is configured to obtain the information about the destination before the vehicle travels to the destination; and the control unit is configured to prompt, based on the information about the destination and the state of charge of the vehicle, the user with a state of charge corresponding to an outward trip, the state of charge corresponding to the return trip, and the state of charge corresponding to the first mode.

According to a third aspect, a control apparatus is provided. The control apparatus includes a processing unit and a storage unit. The storage unit is configured to store instructions. The processing unit executes the instructions stored in the storage unit, so that the control apparatus performs any possible method in the first aspect.

According to a fourth aspect, a control system is provided. The system includes a prompt apparatus and a computing platform. The computing platform includes any possible control apparatus in the second aspect or the third aspect.

In some possible implementations, the prompt apparatus includes a sound-making apparatus and/or a display apparatus.

According to a fifth aspect, a vehicle is provided. The vehicle includes any possible control apparatus in the second aspect, or includes the control apparatus in the third aspect, or includes the control system in the fourth aspect.

According to a sixth aspect, a computer program product is provided. The computer program product includes computer program code. When the computer program code is run on a computer, the computer is enabled to perform any possible method in the first aspect.

It should be noted that all or a part of the computer program code may be stored in a first storage medium. The first storage medium may be packaged together with a processor, or may be packaged separately from a processor. This is not specifically limited in this embodiment of this application.

According to a seventh aspect, a computer-readable medium is provided. The computer-readable medium stores program code. When the computer program code is run on a computer, the computer is enabled to perform any possible method in the first aspect.

According to an eighth aspect, an embodiment of this application provides a chip system. The chip system includes a processor, configured to invoke a computer program or computer instructions stored in a memory, so that the processor is enabled to perform any possible method in the first aspect.

With reference to the eighth aspect, in a possible implementation, the processor is coupled to the memory through an interface.

With reference to the eighth aspect, in a possible implementation, the chip system further includes the memory, and the memory stores the computer program or the computer instructions.

### BRIEF DESCRIPTION OF DRAWINGS

FIG. 1 is a functional block diagram of a vehicle according to an embodiment of this application;
FIG. 2 is a diagram of display distribution in a cockpit of a vehicle according to an embodiment of this application;
FIG. 3(a), FIG. 3(b), and FIG. 3(c) show a group of GUIs according to an embodiment of this application;
FIG. 4(a) and FIG. 4(b) show another group of GUIs according to an embodiment of this application;
FIG. 5(a) and FIG. 5(b) show another group of GUIs according to an embodiment of this application;
FIG. 6(a) and FIG. 6(b) show another group of GUIs according to an embodiment of this application;
FIG. 7(a) and FIG. 7(b) show another group of GUIs according to an embodiment of this application;
FIG. 8(a), FIG. 8(b), and FIG. 8(c) show another group of GUIs according to an embodiment of this application;
FIG. 9(a) and FIG. 9(b) show another group of GUIs according to an embodiment of this application;
FIG. 10 shows another GUI according to an embodiment of this application;
FIG. 11(a) and FIG. 11(b) show another group of GUIs according to an embodiment of this application;
FIG. 12(a) and FIG. 12(b) show another group of GUIs according to an embodiment of this application;
FIG. 13 shows another GUI according to an embodiment of this application;
FIG. 14 is a schematic flowchart of a control method according to an embodiment of this application;
FIG. 15 is a block diagram of a system according to an embodiment of this application;
FIG. 16A, FIG. 16B, and FIG. 16C are another schematic flowchart of a control method according to an embodiment of this application;
FIG. 17 is another schematic flowchart of a control method according to an embodiment of this application;
FIG. 18 is another schematic flowchart of a control method according to an embodiment of this application;
FIG. 19 is another schematic flowchart of a control method according to an embodiment of this application;
FIG. 20 is another schematic flowchart of a control method according to an embodiment of this application; and
FIG. 21 is a block diagram of a control apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation. In addition, in the descriptions of embodiments, unless otherwise specified, "a plurality of" means two or more.

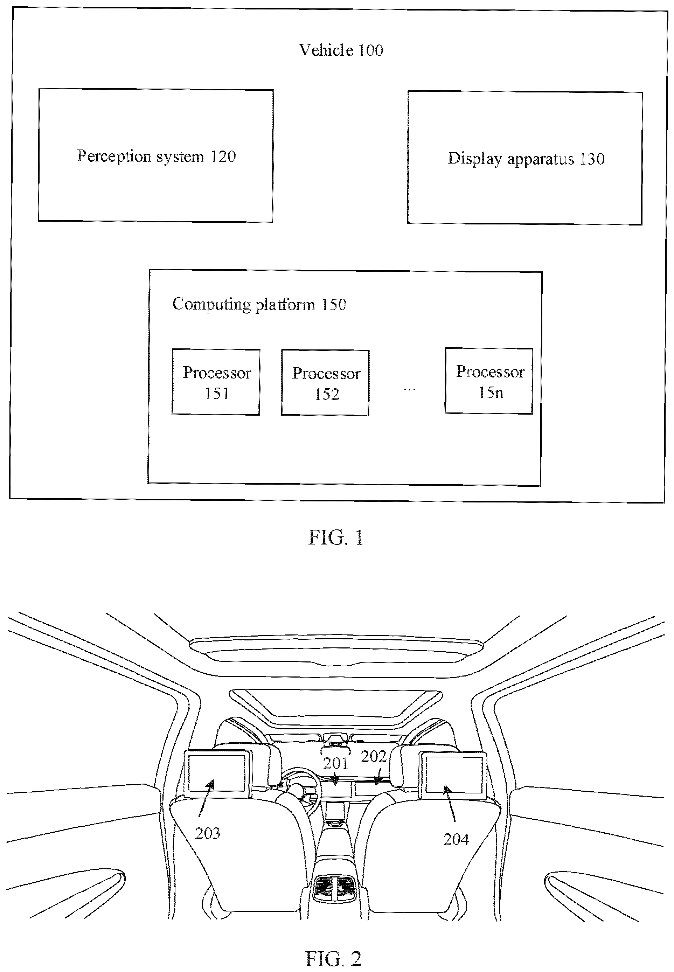

FIG. 1 is a functional block diagram of a vehicle 100 according to an embodiment of this application. The vehicle 100 may include a perception system 120, a display apparatus 130, and a computing platform 150. The perception system 120 may include one or more sensors that sense information about an ambient environment of the vehicle 100. For example, the perception system 120 may include one or more of a positioning system, an inertial measurement unit (inertial measurement unit, IMU), a lidar, a millimeter-wave radar, an ultrasonic radar, and a camera apparatus, where the positioning system may be a global positioning system (global positioning system, GPS), a BeiDou system, or another positioning system.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. A part or all of the processors 151 to 15n may invoke the instructions in the memory to execute the instructions, to implement a corresponding function.

The display apparatus 130 in the cockpit is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital dashboard display, a central display screen, a display in front of a passenger in a front passenger seat (also referred to as a front-row passenger), a display in front of a rear-row passenger on the left, and a display in front of a rear-row passenger on the right. Even a vehicle window may be used as a display for display. The head-up display is also referred to as a head-up display system. The head-up display is mainly configured to display driving information such as speed per hour and navigation on a display device (for example, a windshield) in front of a driver, to reduce a gaze transfer time of the driver, avoid a pupil change caused by gaze transfer of the driver, and improve driving safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may alternatively have another type of system with technology evolution. This is not limited in this application.

The foregoing display apparatus is described by using the vehicle-mounted display and the projection display as an example. Embodiments of this application are not limited thereto. For example, the display apparatus may alternatively be a light display or a projection screen.

FIG. 2 is a diagram of an example of distribution of displays in a vehicle cockpit according to an embodiment of this application. As shown in FIG. 2, the cockpit of the vehicle may include a display 201 (or may be referred to as a central display screen), a display 202 (or may be referred to as a front passenger entertainment screen), a display 203 (or may be referred to as an entertainment screen in a second-row left area), a display 204 (or may be referred to as an entertainment screen in a second-row right area), and an instrument panel.

It should be understood that a graphical user interface (graphical user interface, GUI) in the following embodiments is described by using a five-seat vehicle shown in FIG. 2 as an example. Embodiments of this application are not limited thereto. For example, a cockpit of a seven-seat sport utility vehicle (sport utility vehicle, SUV) may include a central display screen, a front passenger entertainment screen, an entertainment screen in a second-row left area, an entertainment screen in a second-row right area, an entertainment screen in a third-row left area, and an entertainment screen in a third-row right area. For another example, a cockpit of a bus may include a front-row entertainment screen and a rear-row entertainment screen; or may include a display in a driving area and an entertainment screen in a passenger area. In an implementation, the entertainment screen in the passenger area may alternatively be disposed on a top of the cockpit.

As described above, with the development of vehicle intelligence, camping during a road trip on weekends or holidays becomes increasingly common. A user can enjoy user experience brought by intelligent features such as vehicle discharge (for example, camping barbecue and entertainment) and in-vehicle sleep. Currently, a vehicle owner usually has battery anxiety and is worried about consumption on state of charge of an entire vehicle due to discharge, in-vehicle sleep, and maintenance of an on state of another low-voltage or high-voltage component. As a result, a state of charge of a return trip is insufficient and user experience is affected.

Embodiments of this application provide a control method and apparatus, and a vehicle. By obtaining information about a destination, a state of charge of a current vehicle may be appropriately planned, and a user is prompted with a state of charge corresponding to a return trip and a state of charge corresponding to a first mode. In this way, the user is prompted with an allocation status of the state of charge of the vehicle, to alleviate battery anxiety of the user, thereby helping improve use experience of the user during camping.

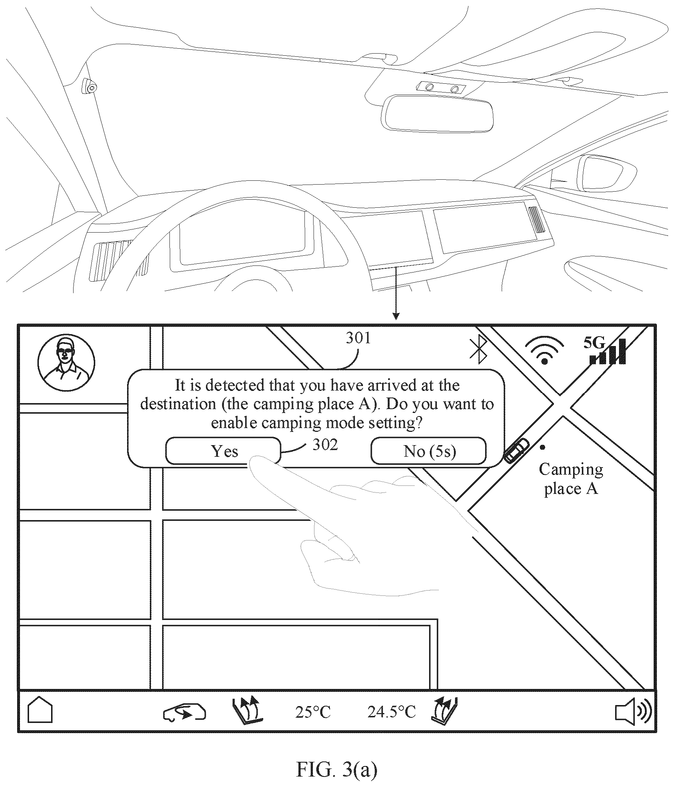

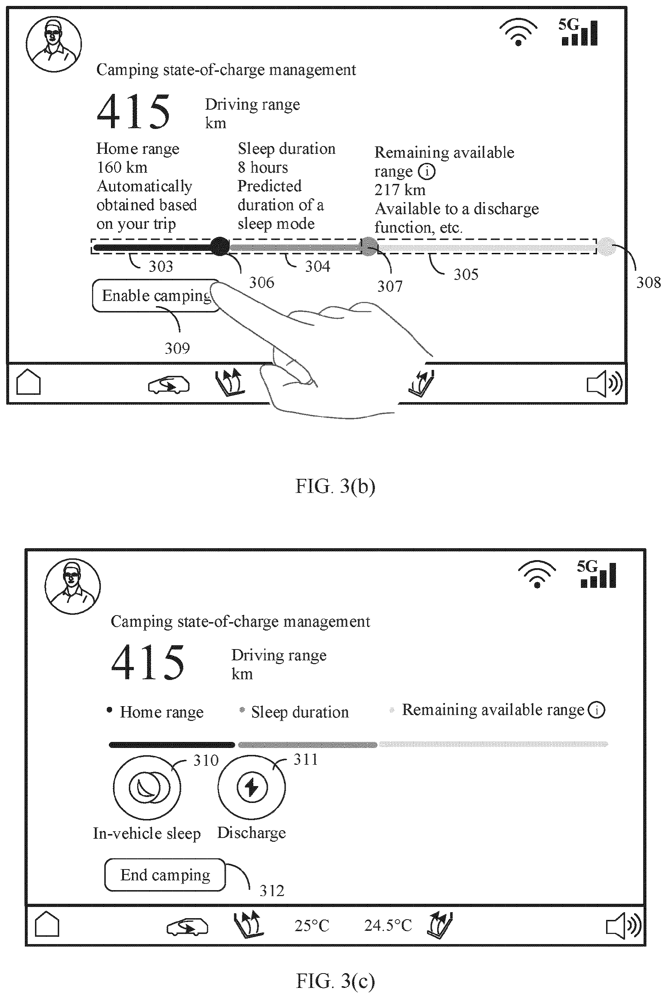

For example, FIG. 3(a), FIG. 3(b), and FIG. 3(c) show a group of graphical user interfaces (graphical user interface, GUI) according to an embodiment of this application.

As shown in FIG. 3(a), when it is detected that a user drives a vehicle to a destination (for example, a camping place A), the vehicle may control the display 201 to display a prompt box 301, an on control 302, and a cancel control. The prompt box 301 includes prompt information "It is detected that you have arrived at the destination (the camping place A). Do you want to enable camping mode setting?"

As shown in FIG. 3(b), when an operation of tapping the on control 302 by the user is detected, the vehicle may control the display 201 to display a camping state-of-charge management interface. The camping state-of-charge management interface includes information about a driving range (for example, the driving range is 415 kilometers (kilometer, km)) corresponding to a state of charge of the vehicle and a planning result of the state of charge of the vehicle. The planning result includes a home range, a sleep duration, and a remaining available range. The home range is a range from a destination to a home (for example, 160 kilometers). The sleep duration is a duration that is of an in-vehicle sleep mode and that is predicted by the vehicle. The remaining available range is a travel range corresponding to a state of charge that can be used by the user in a discharge mode.

The camping state-of-charge management interface may further include a state-of-charge bar 303, a state-of-charge bar 304, and a state-of-charge bar 305. The state-of-charge bar 303 indicates a state of charge that needs to be consumed for the home range. The state-of-charge bar 304 indicates a state of charge that needs to be consumed for a sleep mode lasting for 8 hours. The state-of-charge bar 305 indicates a state of charge that can be consumed in the discharge mode, or the state-of-charge bar 305 indicates a state of charge that is in a state of charge of the vehicle except the state of charge for the home range and the state of charge for the sleep mode lasting for 8 hours.

The camping state-of-charge management interface may further include a state-of-charge adjustment control 306, a state-of-charge adjustment control 307, a state-of-charge adjustment control 308, and a camping-mode on control 309. The state-of-charge adjustment control 306 is used to adjust a state of charge corresponding to the home range. The state-of-charge adjustment control 307 is used to adjust a state of charge corresponding to the sleep mode. The state-of-charge adjustment control 308 is used to adjust a state of charge corresponding to the remaining available range, or the state-of-charge adjustment control 308 is used to adjust the state of charge that can be consumed in the discharge mode.

In an embodiment, the vehicle may control, based on a historical camping record of the user, the display 201 to display lengths of the state-of-charge bar 304 and the state-of-charge bar 305.

For example, in a past period of time (for example, half a year), the user uses only the discharge mode at the camping destination and does not enable the in-vehicle sleep mode. In this way, when the camping state-of-charge management interface is displayed, the display 201 may be controlled to display the length of the state-of-charge bar 304 as 0, and the length of the state-of-charge bar 305 may be determined based on a state of charge obtained by subtracting the state of charge corresponding to the home range from the state of charge of the vehicle.

For example, in a past period of time (for example, half a year), an average duration of using the in-vehicle sleep mode by the user at the camping destination is 5 hours. In this way, the length of the state-of-charge bar 304 may be determined based on the state of charge in the in-vehicle sleep mode for 5 hours, and the length of the state-of-charge bar 305 may be determined based on a state of charge obtained by subtracting the state of charge corresponding to the home range and the state of charge in the in-vehicle sleep mode for 5 hours from the state of charge of the vehicle.

As shown in FIG. 3(c), when an operation of tapping the camping-mode on control 309 by the user is detected, the vehicle may control the display 201 to display another camping state-of-charge management interface. The camping state-of-charge management interface includes the state-of-charge bar 303, the state-of-charge bar 304, the state-of-charge bar 305, an in-vehicle sleep mode on control 310, a discharge function on control 311, and a camping-mode end control 312.

In an embodiment, when an operation of tapping the control 310 by the user is detected, the vehicle may enable the in-vehicle sleep mode and control a cockpit device to be in a first state. The cockpit device includes at least one of a seat, a fragrance, a sound-making apparatus, a light apparatus, an air conditioner, and a display apparatus.

In an embodiment, the vehicle stores a mapping relationship between the user and a status of the cockpit device. Controlling the cockpit device to be in the first state includes: when the in-vehicle sleep mode is enabled, controlling, based on the mapping relationship between the first user and the cockpit device, the cockpit device to be in the first state.

For example, Table 1 shows the mapping relationship between the user and the status of the cockpit device.

**Table 1**

| User | Status of the cockpit device | | | | | |
|---|---|---|---|---|---|---|
| | Luminance of a central display screen | Volume of a speaker | Color of a light strip | Temperature of an air conditioner | Angle of a seat | ... |
| User A | 200 nits | 60 dB | Blue | 23°C | 160° | ... |
| User B | 150 nits | 50 dB | Pink | 26°C | 120° | ... |
| ... | ... | ... | ... | ... | ... | ... |

Table 1 is merely an example, and embodiments of this application are not limited thereto. For example, the status of the cockpit device may further include an air velocity and an air exhaust direction of the air conditioner, and a type of fragrance (for example, refreshing, odor removal, soothing and relaxing).

The angle of the seat may be an angle formed between a cushion of the seat and a back of the seat.

The foregoing is described by using an example in which the user taps the control 310 to trigger the in-vehicle sleep mode to be enabled. This embodiment of this application is not limited thereto. For example, when it is detected that the user sends a voice instruction "Enable the in-vehicle sleep mode", the in-vehicle sleep mode may be enabled.

For example, when a rest intention or a sleep intention of the user is detected, the in-vehicle sleep mode is automatically enabled.

In an embodiment, when the rest intention or the sleep intention of the user is detected, automatically enabling the in-vehicle sleep mode includes: when a yawning expression or a dozing expression of the user is detected, automatically enabling the in-vehicle sleep mode.

In an embodiment, when the yawning expression of the user is detected, automatically enabling the in-vehicle sleep mode includes: when it is detected, within a first preset duration, that a quantity of times that the user yawns is greater than or equal to a preset quantity of times, automatically enabling the in-vehicle sleep mode.

For example, the first preset duration is 5 minutes, and the preset quantity of times is 5.

In an embodiment, when the dozing expression of the user is detected, automatically enabling the in-vehicle sleep mode includes: when it is detected that a duration of the dozing expression of the user is greater than or equal to a second preset duration, automatically enabling the in-vehicle sleep mode.

For example, the second preset duration is 3 minutes.

In this embodiment of this application, when the yawning expression or the dozing expression of the user is detected, the in-vehicle sleep mode may be automatically enabled. In this way, the user does not need to manually enable the in-vehicle sleep mode. This helps improve user experience and also helps improve an intelligence degree of the vehicle.

GUIs in FIG. 3(a), FIG. 3(b), and FIG. 3(c) and the following accompanying drawings are described by using the in-vehicle sleep mode as an example. Embodiments of this application are not limited thereto. For example, a mode related to a user rest in the cockpit may further include a sleep mode, a nap mode, a rest mode, or an in-vehicle camping mode.

In an embodiment, when an operation of tapping the control 311 by the user is detected, the vehicle may start discharging. For example, the user may use a state of charge strip to connect a discharge interface of the vehicle. After connecting a barbecue device, a refrigerator, an out-of-cockpit singing device, or an out-of-cockpit projection device to a discharge connection accessory, the user may start out-of-vehicle camping.

In an embodiment, the vehicle may further send camping state-of-charge management information to a mobile terminal (for example, a mobile phone) of the user. In this way, when the user camps outside the vehicle, the user may view the camping state-of-charge management information in time. Alternatively, when a state of charge of discharging is about to be used up, the user may be prompted in a manner of vibration, ringing, or a voice prompt of the mobile phone, to avoid a case in which excessive consumption of the discharged state of charge affects the state of charge corresponding to the return trip or the state of charge corresponding to the in-vehicle sleep mode.

The foregoing discharge mode may also be referred to as an out-of-vehicle camping mode, and the discharge mode may include an out-of-vehicle barbecue mode, an out-of-vehicle projection mode, an out-of-vehicle karaoke mode, and the like.

In this embodiment of this application, when arriving at the camping destination, the vehicle may appropriately plan a current state of charge of the vehicle, and prompt the user with the state of charge corresponding to the return trip and a state of charge corresponding to the camping mode (including the in-vehicle sleep mode and/or the discharge function). In this way, the user is prompted with an allocation status of the state of charge of the vehicle, to alleviate battery anxiety of the user, thereby helping improve use experience of the user during camping.

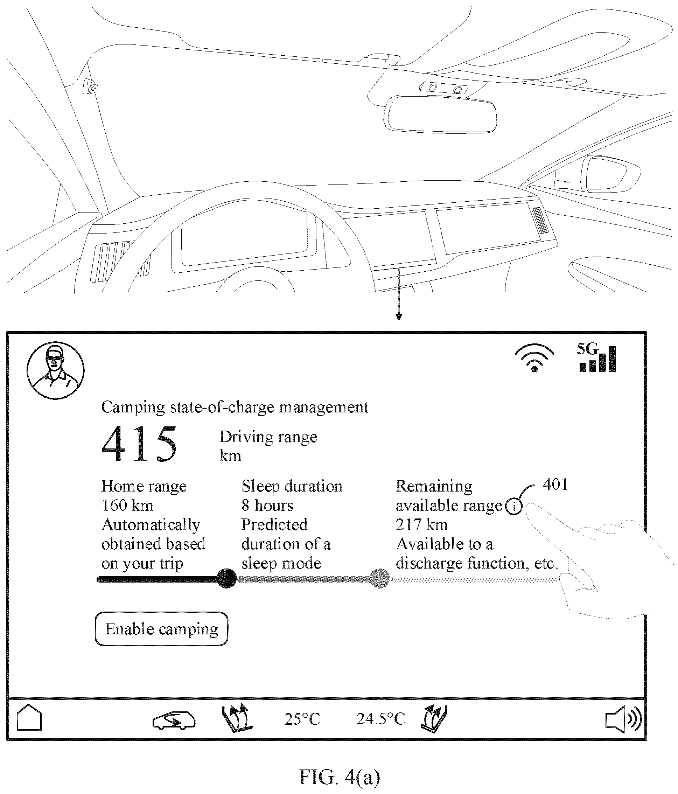

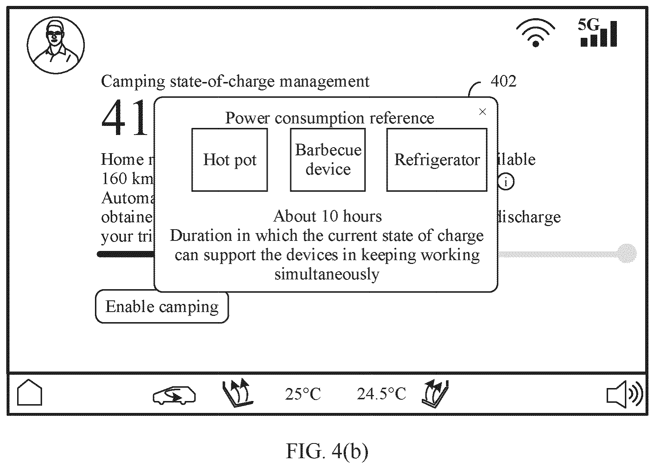

For example, FIG. 4(a) and FIG. 4(b) show a group of GUIs according to an embodiment of this application.

As shown in FIG. 4(a), the GUI is a camping state-of-charge management interface, and the displayed interface includes a control 401.

As shown in FIG. 4(b), when detecting an operation of tapping the control 401 by the user, the vehicle may control the display 201 to display a prompt box 402. The prompt box 402 includes prompt information. The prompt information is used to inform the user that a duration in which a state of charge corresponding to a remaining available range can support a hot pot device, a barbecue device, and a refrigerator to simultaneously work continuously is about 10 hours.

In an embodiment, the prompt box 402 may further include an input box of a power of a power-consuming device. After detecting that the user inputs the power required by the power-consuming device into the input box, the vehicle may update a discharge duration displayed in the prompt box 402. For example, when detecting that the user inputs 1500 watts (W), the vehicle may change the discharge duration displayed in the prompt box 402 from 10 hours to 20 hours.

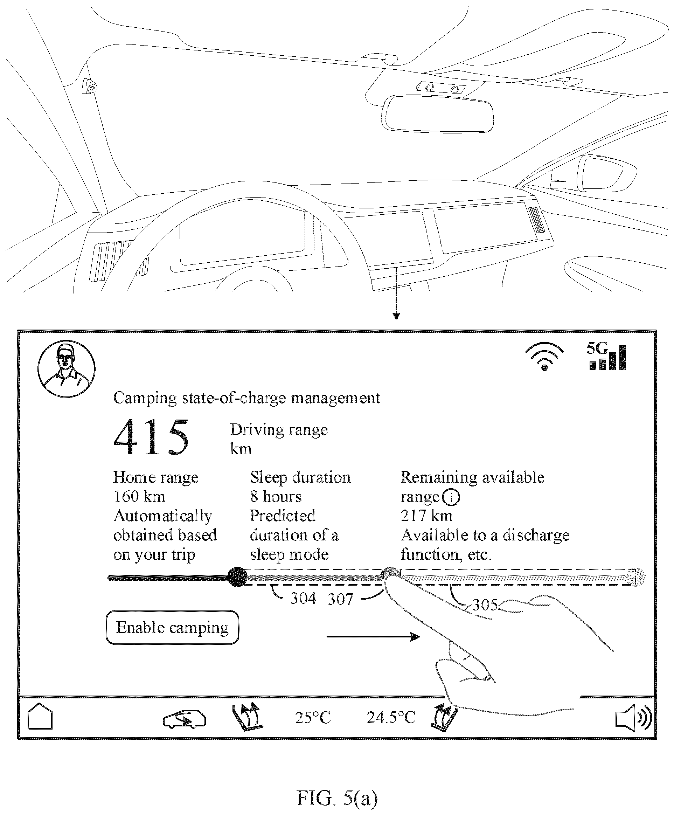

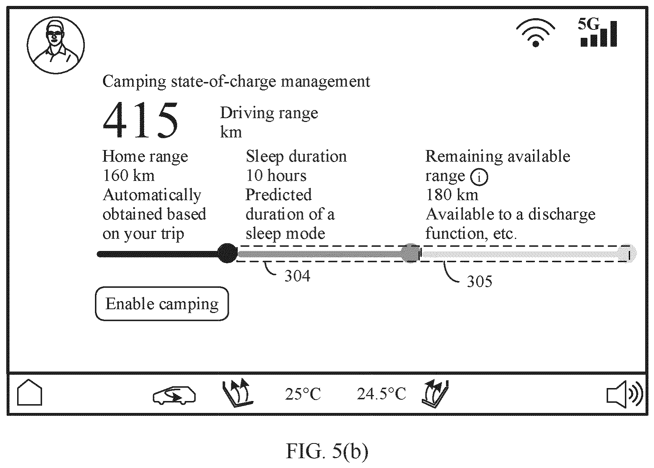

For example, FIG. 5(a) and FIG. 5(b) show a group of GUIs according to an embodiment of this application.

As shown in FIG. 5(a), the GUI is a camping state-of-charge management interface. When an operation of dragging the control 307 rightward by the user is detected, the display 201 may be controlled to display a GUI shown in FIG. 5(b).

As shown in FIG. 5(b), the GUI is another camping state-of-charge management interface. In response to detection of the operation of dragging the control 307 rightward by the user, based on a distance at which the control 307 slides rightward, the vehicle may keep a length of the state-of-charge bar 303 unchanged, increase the length of the state-of-charge bar 304, and shorten the length of the state-of-charge bar 305. Increasing the length of the state-of-charge bar 304 indicates increasing the duration of the in-vehicle sleep mode, or increasing the state of charge corresponding to the in-vehicle sleep mode. Shortening the state-of-charge bar 305 indicates decreasing the state of charge corresponding to the discharge mode, or decreasing the state of charge corresponding to the remaining available range.

For example, after the length of the state-of-charge bar 304 corresponding to the in-vehicle sleep mode is increased, the sleep duration is increased from 8 hours to 10 hours, and the remaining available range is decreased from 217 km to 180 km.

In this embodiment of this application, after it is detected that the user increases the length of the state-of-charge bar corresponding to the in-vehicle sleep mode, the state of charge corresponding to the discharge mode may be automatically decreased. In this way, the user may adjust, according to a requirement of the user, the state of charge allocated to the in-vehicle sleep mode. In addition, after the state of charge corresponding to the in-vehicle sleep mode is increased, the state of charge corresponding to the remaining available range may be automatically reduced, so that the user can view the remaining available range or the discharge duration in time, to facilitate alleviation of the battery anxiety of the user, thereby helping improve use experience of the user in the camping mode.

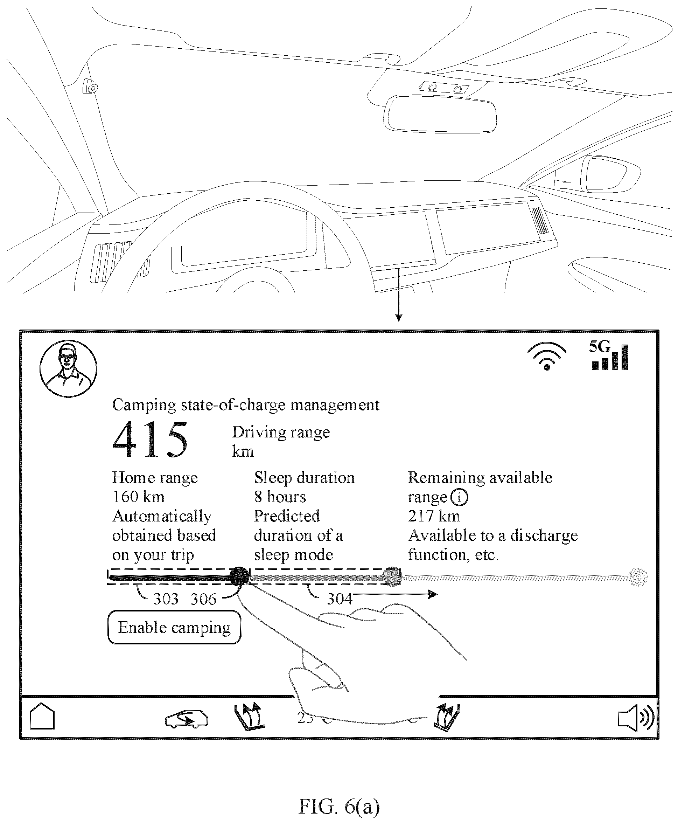

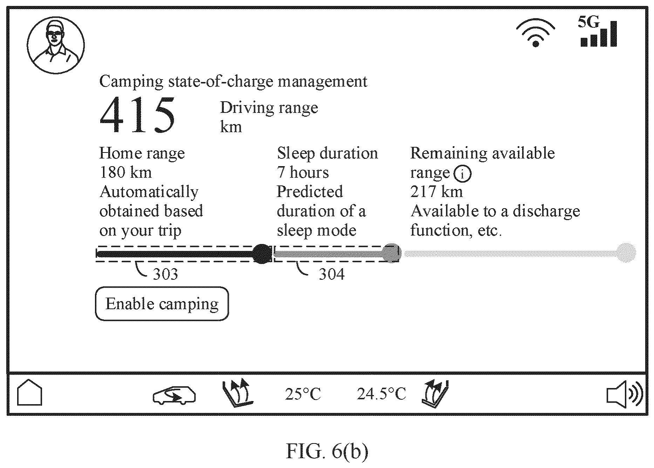

For example, FIG. 6(a) and FIG. 6(b) show a group of GUIs according to an embodiment of this application.

As shown in FIG. 6(a), the GUI is a camping state-of-charge management interface. When an operation of dragging the control 306 rightward by the user is detected, the display 201 may be controlled to display a GUI shown in FIG. 6(b).

As shown in FIG. 6(b), the GUI is another camping state-of-charge management interface. In response to detection of the operation of dragging the control 306 rightward by the user, based on a distance at which the control 306 slides rightward, the vehicle may increase the length of the state-of-charge bar 303 and shorten the length of the state-of-charge bar 304. Increasing the length of the state-of-charge bar 303 indicates increasing the home range, or increasing the state of charge corresponding to the home range. Shortening the state-of-charge bar 304 indicates reducing the state of charge corresponding to the in-vehicle sleep mode.

For example, after the length of the state-of-charge bar 303 corresponding to the home range is increased, the home range is increased from 160 km to 180 km, and the sleep duration is reduced from 8 hours to 7 hours.

In an embodiment, based on a distance at which the control 306 slides rightward, the vehicle may alternatively keep the length of the state-of-charge bar 304 unchanged, increase the length of the state-of-charge bar 303, and shorten the length of the state-of-charge bar 305.

In an embodiment, based on a distance at which the control 306 slides rightward, the vehicle may increase the length of the state-of-charge bar 303, shorten the length of the state-of-charge bar 304, and shorten the length of the state-of-charge bar 305.

In an embodiment, the vehicle may shorten the length of the state-of-charge bar 304 and/or the length of the state-of-charge bar 305 based on a distance at which the control 306 slides rightward and the historical camping record of the user.

For example, the historical camping record of the user indicates that a duration of using the in-vehicle sleep mode when the user drives the vehicle for camping in a past period of time (for example, half a year) is greater than a duration of using the discharge mode. In this case, when the operation of dragging the control 306 by the user rightward is detected, the length of the state-of-charge bar 305 may be shortened and the length of the state-of-charge bar 304 may be kept unchanged. Alternatively, when the operation of dragging the control 306 rightward by the user is detected, the length of the state-of-charge bar 304 may be shortened and the length of the state-of-charge bar 305 may be shortened. A reduced state-of-charge value corresponding to the shortening of the state-of-charge bar 304 is less than a reduced state-of-charge value corresponding to the shortening of the state-of-charge bar 305.

For example, the historical camping record of the user indicates that a state of charge consumed in the in-vehicle sleep mode when the user drives the vehicle for camping in a past period of time (for example, half a year) is greater than a state of charge consumed in the discharge mode. In this case, when the operation of dragging the control 306 by the user rightward is detected, the length of the state-of-charge bar 305 may be shortened and the length of the state-of-charge bar 304 may be kept unchanged. Alternatively, when the operation of dragging the control 306 rightward by the user is detected, the length of the state-of-charge bar 304 may be shortened and the length of the state-of-charge bar 305 may be shortened. A reduced state-of-charge value corresponding to the shortening of the state-of-charge bar 304 is less than a reduced state-of-charge value corresponding to the shortening of the state-of-charge bar 305.

In this embodiment of this application, to ensure that the user can drive the vehicle to return to home from the camping destination, the user may increase, based on a result of planning the state of charge of the vehicle, the state of charge corresponding to the home range, and may automatically decrease the state of charge corresponding to the in-vehicle sleep mode and/or the state of charge corresponding to the discharge mode. In this way, a case in which the vehicle is out of power on passage due to an insufficient state of charge on the way home can be further avoided, to facilitate alleviation of battery anxiety of the user, thereby helping improve use experience of the user during camping.

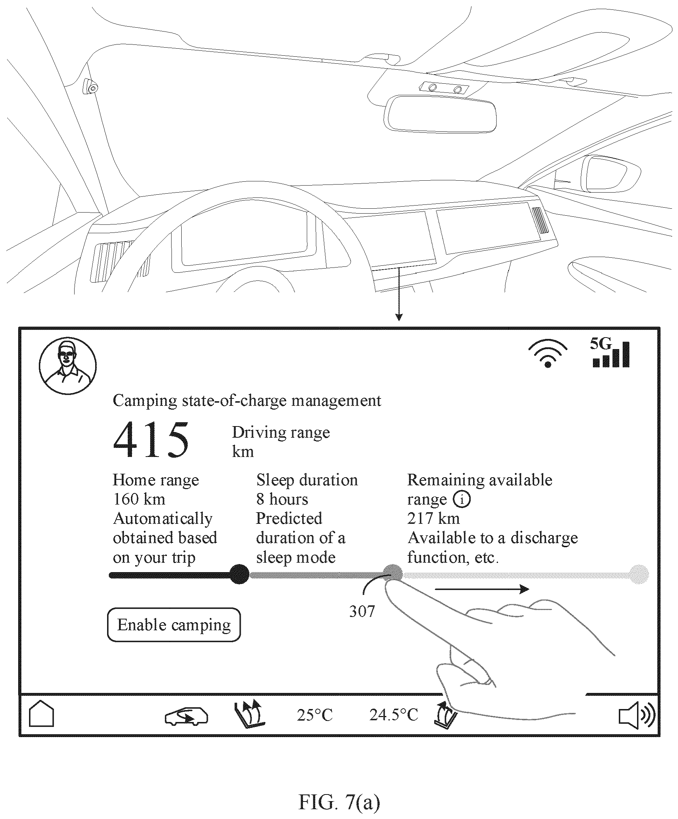

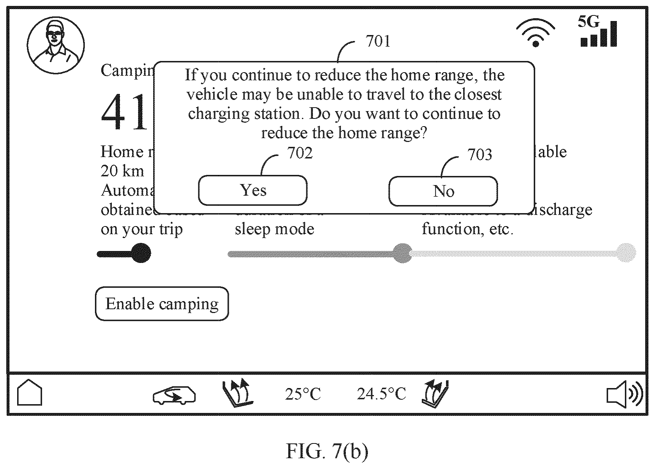

For example, FIG. 7(a) and FIG. 7(b) show a group of GUIs according to an embodiment of this application.

As shown in FIG. 7(a), the GUI is a camping state-of-charge management interface. When an operation of dragging the control 307 rightward by the user is detected, the display 201 may be controlled to display a GUI shown in FIG. 7(b).

In response to detection of the operation of dragging the control 307 rightward by the user, based on a distance at which the control 307 slides rightward, the vehicle may keep the length of the state-of-charge bar 305 unchanged, shorten the length of the state-of-charge bar 303, and increase the length of the state-of-charge bar 304.

As shown in FIG. 7(b), the GUI is another camping state-of-charge management interface. When it is detected that the state of charge corresponding to the home range cannot enable the user to drive the vehicle from the camping destination to a charging station closest to the camping destination, the vehicle may control the display 201 to display a prompt box 701. The prompt box 701 includes prompt information "If you continue to reduce the home range, the vehicle may be unable to travel to the closest charging station. Do you want to continue to reduce the home range?", a control 702, and a control 703. In an embodiment, after it is detected that the user taps the control 702, an operation of dragging the control 307 rightward by the user is further detected, and the length of the state-of-charge bar 303 may be further shortened.

In an embodiment, after it is detected that the user taps the control 703, an operation of dragging the control 307 rightward by the user is further detected. In this case, the length of the state-of-charge bar 303 may be kept unchanged, the length of the state-of-charge bar 304 may be further increased, and the length of the state-of-charge bar 305 may be shortened.

In this way, by prompting the user, the user can know that it cannot be ensured due to the decrease of the home range that the user drives the vehicle to the nearest charging station, to avoid a case in which the vehicle is out of power on passage due to an excessively low state of charge corresponding to the home range and facilitate alleviation of battery anxiety of the user, thereby helping improve use experience of the user.

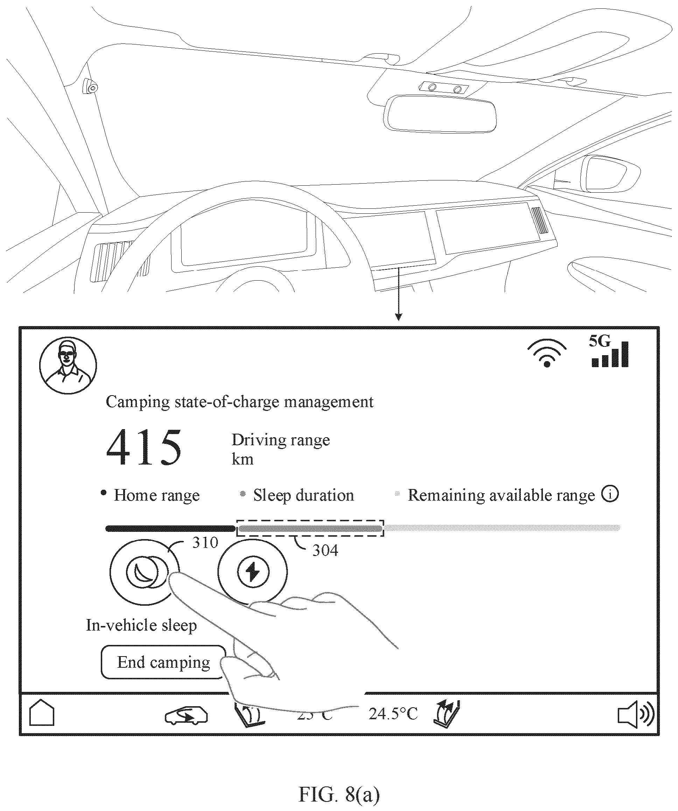

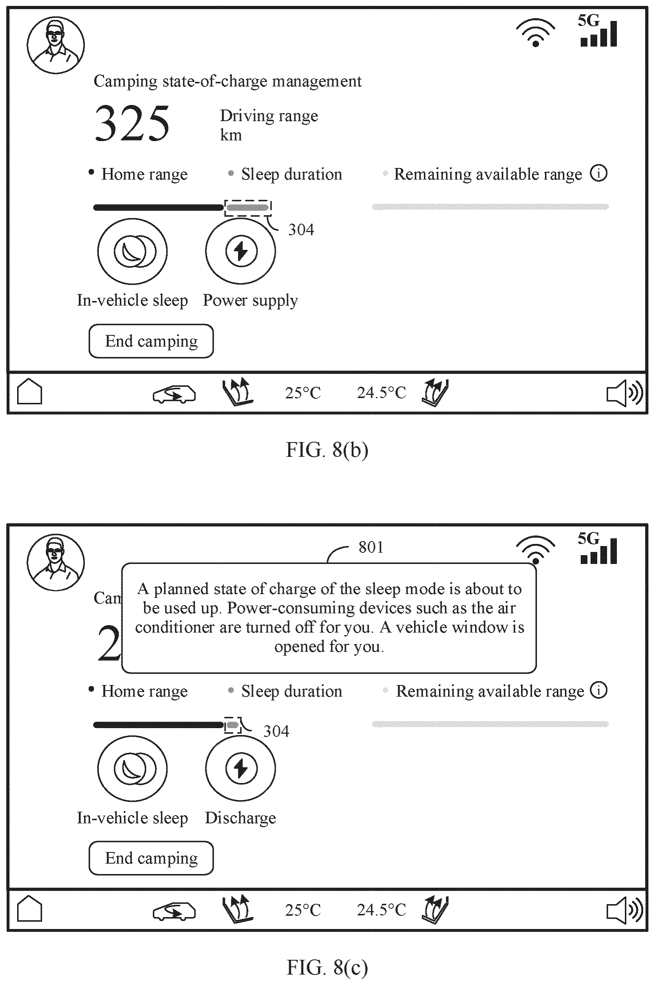

For example, FIG. 8(a), FIG. 8(b), and FIG. 8(c) show a group of GUIs according to an embodiment of this application.

As shown in FIG. 8(a), the GUI is a camping state-of-charge management interface. When an operation of tapping the control 310 by the user is detected, the in-vehicle sleep mode may be controlled to be enabled.

For example, when the in-vehicle sleep mode is enabled, the vehicle may control an air conditioner in the cockpit to be turned on and control a seat angle to be adjusted to 180°.

As shown in FIG. 8(b), in a running process of the in-vehicle sleep mode, the length of the state-of-charge bar 304 may be shortened with the state of charge in the in-vehicle sleep mode.

As shown in FIG. 8(c), when the length of the state-of-charge bar 304 is about to become 0, the vehicle may control the in-vehicle sleep mode to be disabled and control the display 201 to display a prompt box 801. The prompt box 801 includes prompt information "A planned state of charge of the sleep mode is about to be used up. Power-consuming devices such as the air conditioner are turned off for you. A vehicle window is opened for you."

In an embodiment, when the length of the state-of-charge bar 304 is about to become 0, the vehicle may further control a speaker in the cockpit to send a voice signal. The voice signal is used to inform the user that the in-vehicle sleep mode has been disabled.

In this embodiment of this application, when the planned state of charge corresponding to the sleep mode is about to be used up, the vehicle may automatically disable the in-vehicle sleep mode. In this way, the following case can be avoided: The in-vehicle sleep mode is enabled, which affects the state of charge corresponding to the home range or the state of charge corresponding to the remaining available range. In addition, by opening the vehicle window, the user in a sleep state may keep breathing smoothly, to avoid a case in which sleep quality of the user is affected because the in-vehicle sleep mode is disabled, thereby helping improve user experience when the user uses the camping mode.

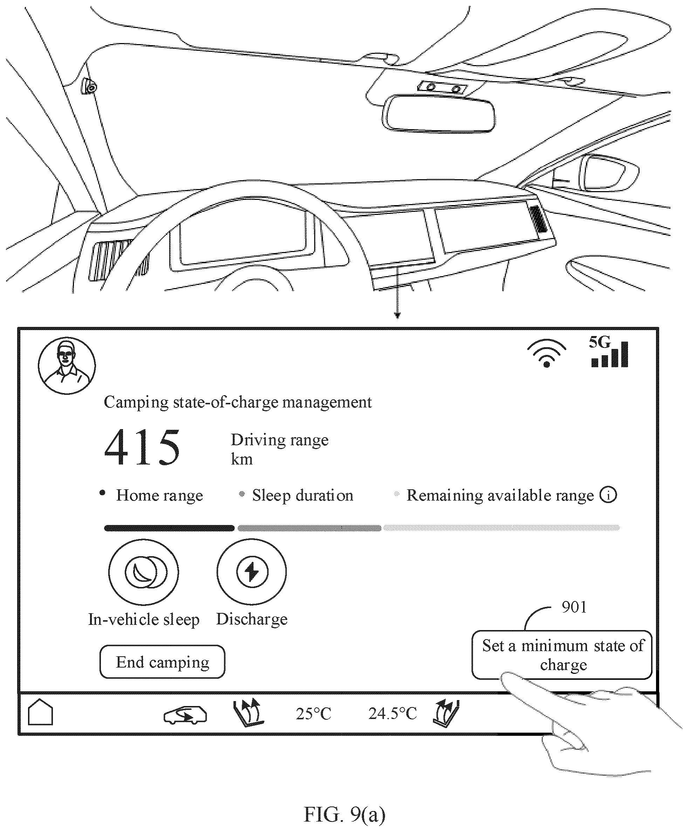

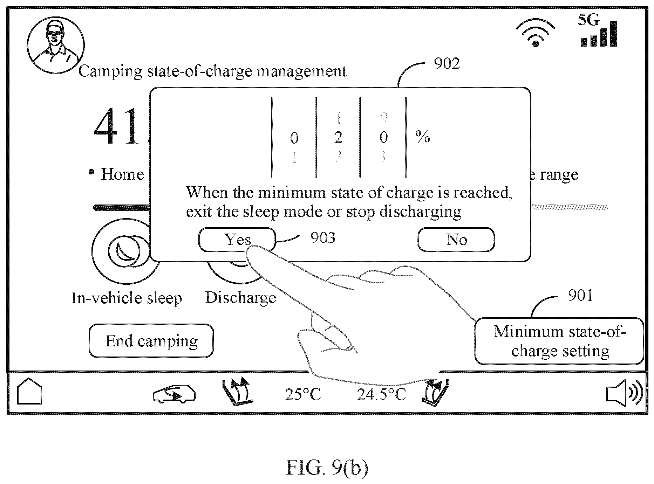

For example, FIG. 9(a) and FIG. 9(b) show a group of GUIs according to an embodiment of this application.

As shown in FIG. 9(a), the GUI is a camping state-of-charge management interface. The camping state-of-charge management interface includes a "Set a minimum state of charge" control 901. When an operation of tapping the control 901 by the user is detected, the display 201 may be controlled to display a GUI shown in FIG. 9(b).

As shown in FIG. 9(b), in response to detection of the operation of tapping the control 901 by the user, the vehicle may control the display 201 to display a prompt box 902 on the camping state-of-charge management interface. The prompt box 902 includes prompt information "When the minimum state of charge is reached, exit the sleep mode or stop discharging."

When it is detected that the user sets the minimum state of charge to 20% and an operation of tapping a confirm control 903, the vehicle may monitor a state of charge of a battery. In a process in which the user uses the in-vehicle sleep mode or the discharge mode, if it is detected that the state of charge decreases to 20%, the user may exit the in-vehicle sleep mode or stop discharging.

In an embodiment, in the prompt box 902, the user may set a minimum state of charge to be greater than or equal to the state of charge corresponding to the home range.

For example, a state of charge corresponding to the home range (a range from the camping destination to the home) is 15%. In this case, the minimum state of charge that may be set in the prompt box 902 cannot be lower than 15%; or when the minimum state of charge set by the user is lower than 15%, the user may be informed that the user may not be able to return to the home from the camping destination if the user continues to decrease the minimum state of charge.

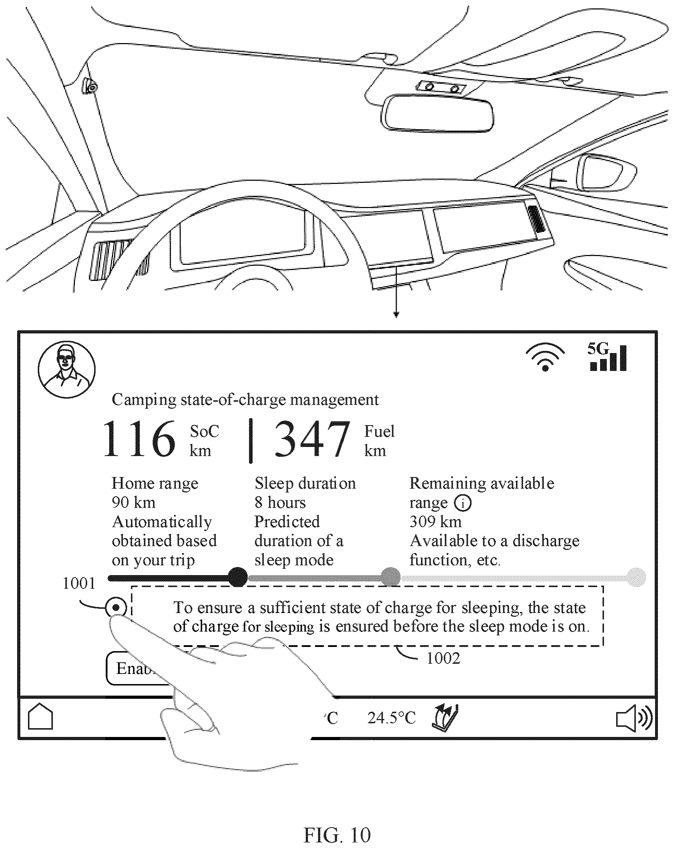

With reference to the GUIs shown in FIG. 3(a) to FIG. 9(b), the foregoing describes a scenario in which state-of-charge evaluation of a pure electric vehicle in a camping mode is presented in segments. With reference to FIG. 10, the following describes a scenario in which state-of-charge evaluation of a range-extended vehicle in a camping mode is presented in segments.

For example, FIG. 10 shows a GUI according to an embodiment of this application. As shown in FIG. 10, for a range-extended vehicle, a camping state-of-charge management interface may include a range (for example, 116 km) corresponding to a state of charge of a battery of the vehicle and a range (for example, 347 km) corresponding to remaining fuel. The vehicle may plan the state of charge of the battery and a state of charge converted by using a range extender. For example, a planning result includes a state of charge corresponding to a home range (for example, 90 km), a state of charge corresponding to a sleep duration of 8 hours, and a state of charge corresponding to a remaining available range (for example, 309 km).

The camping state-of-charge management interface further includes a control 1001 and prompt information 1002 "To ensure a sufficient state of charge for sleeping, the state of charge for sleeping is ensured before the sleep mode is enabled." When it is detected that a user taps the control 1001, the vehicle may compare a planned duration of the in-vehicle sleep mode with a preset duration. For example, the preset duration is 10 hours. When the planned duration (8 hours) of the in-vehicle sleep mode is less than the preset duration, power may be generated by using the range extender after the user taps the control 309, so that the duration of the in-vehicle sleep mode is increased from 8 hours to 10 hours.

In an embodiment, the preset duration may be determined based on a historical camping record of the user. For example, in a past period of time (for example, half a year), an average duration of using the in-vehicle sleep mode by the user in a camping process is 10 hours, and the vehicle may determine 10 hours as the preset duration.

In this way, power is generated by using the range extender, so that the state of charge corresponding to the in-vehicle sleep mode can be increased. When the user enables the in-vehicle sleep mode, it can be ensured that the duration of the in-vehicle sleep mode can reach the preset duration, thereby improving user experience when the user uses the camping mode.

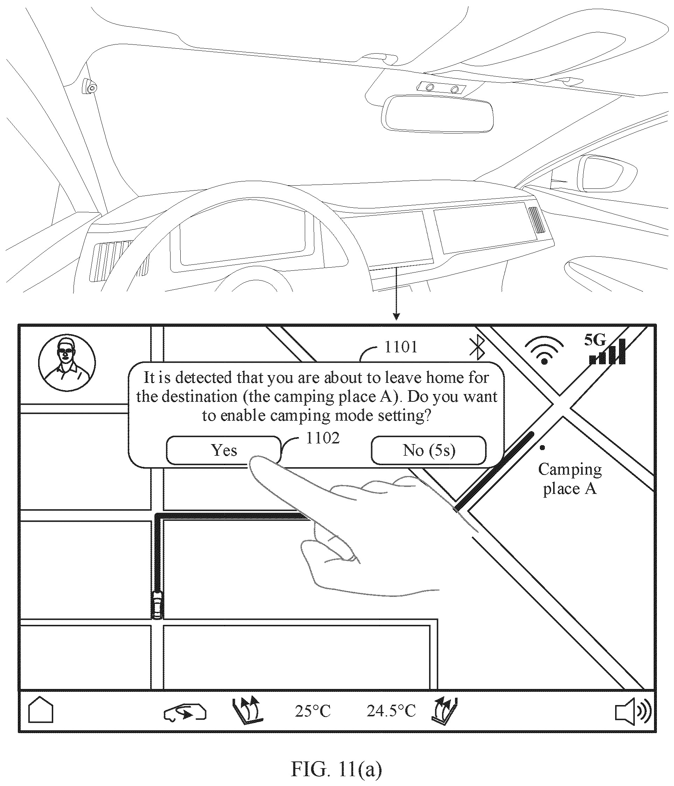

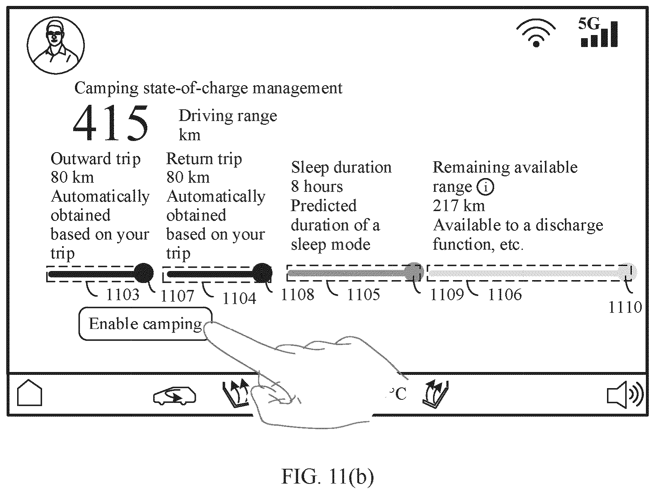

With reference to the accompanying drawings, the foregoing describes planning of the state of charge after the vehicle arrives at the camping destination. With reference to FIG. 11(a) and FIG. 11(b), the following describes a scenario in which state-of-charge evaluation is presented in segments before the vehicle leaves for the camping destination.

For example, FIG. 11(a) and FIG. 11(b) show a group of GUIs according to an embodiment of this application.

As shown in FIG. 11(a), when it is detected that the user plans a navigation route from the home to the destination, the vehicle may control the display 201 to display a prompt box 1101. The prompt box 1101 includes prompt information "It is detected that you are about to leave home for the destination (the camping place A). Do you want to enable camping mode setting?", an on control 1102, and a cancel control.

In an embodiment, that the vehicle may control the display 201 to display the prompt box 1101 includes: when it is determined that the destination is a camping destination, controlling the display 201 to display the prompt box 1101. For example, the vehicle may analyze the destination; and if it is determined that the destination may be used for camping by the user, the vehicle may control the display 201 to display the prompt box 1101. For example, if it is determined that the destination cannot be used for camping by the user (for example, the destination is the XX company), the display 201 may be controlled not to display the prompt box 1101.

As shown in FIG. 11(b), when an operation of tapping the control 1102 by the user is detected, the vehicle may control the display 201 to display a camping state-of-charge management interface. The camping state-of-charge management interface includes information about a driving range (for example, the driving range is 415 km) corresponding to a state of charge of the vehicle and a planning result of the state of charge of the vehicle. The planning result includes information about an outward trip, information about a return trip, a sleep duration, and a remaining available range. The information about the outward trip includes information about a range from the home to the destination. The information about the return trip includes a range (for example, 80 kilometers) from the destination to the home. The sleep duration is a duration that is of the in-vehicle sleep mode and that is predicted by the vehicle. The remaining available range is a range corresponding to a state of charge that can be used by the user in the discharge mode.

The camping state-of-charge management interface may further include a state-of-charge bar 1103, a state-of-charge bar 1104, a state-of-charge bar 1105, and a state-of-charge bar 1106. The state-of-charge bar 1103 indicates a state of charge that needs to be consumed from the home to the destination. The state-of-charge bar 1104 indicates a state of charge that needs to be consumed from the destination to the home. The state-of-charge bar 1105 indicates a state of charge that needs to be consumed for the sleep mode lasting for 8 hours. The state-of-charge bar 1106 indicates a state of charge that can be consumed in the discharge mode, or the state-of-charge bar 1106 indicates a state of charge that is in the state of charge of the vehicle except a state of charge consumed in the outward trip, a state of charge consumed in the return trip, and a state of charge consumed when the sleep mode lasts for 8 hours.

The camping state-of-charge management interface may further include a state-of-charge adjustment control 1107, a state-of-charge adjustment control 1108, a state-of-charge adjustment control 1109, a state-of-charge adjustment control 1110, and a camping-mode on control. The state-of-charge adjustment control 1107 is used to adjust a state of charge corresponding to the outward trip. The state-of-charge adjustment control 1108 is used to adjust a state of charge corresponding to the return trip. The state-of-charge adjustment control 1109 is used to adjust a state of charge corresponding to the sleep mode. The state-of-charge adjustment control 1110 is used to adjust a state of charge corresponding to the remaining available range, or the state-of-charge adjustment control 1110 is used to adjust the state of charge that can be consumed for a discharge function.

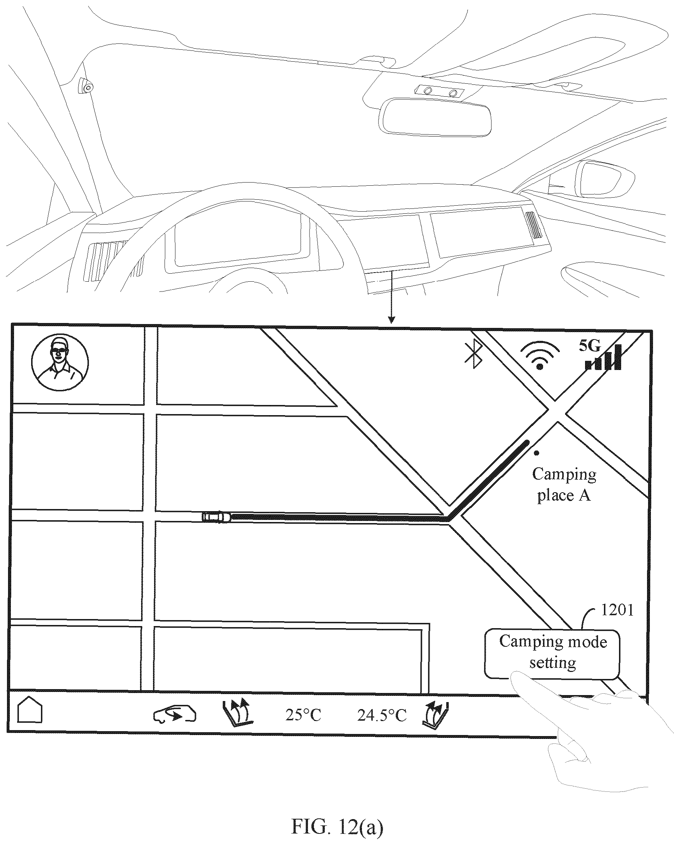

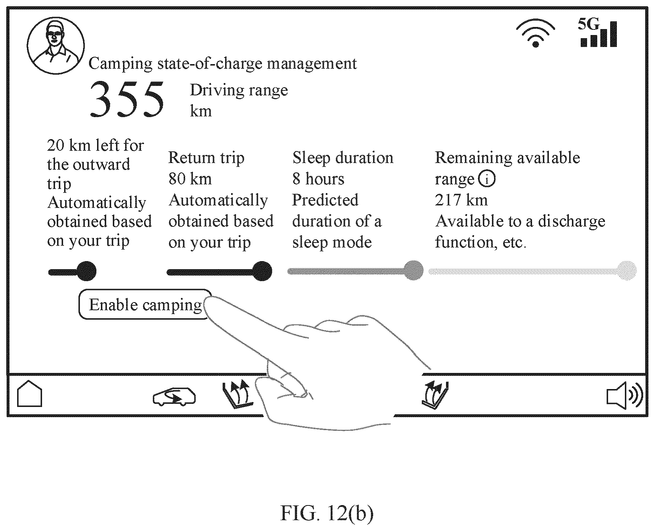

With reference to FIG. 11(a) and FIG. 11(b), the foregoing describes a scenario in which state-of-charge evaluation is presented in segments before the user leaves for the camping destination. With reference to FIG. 12(a) and FIG. 12(b), the following describes a scenario in which state-of-charge evaluation is presented in segments in a process of leaving for a camping destination.

For example, FIG. 12(a) and FIG. 12(b) show a group of GUIs according to an embodiment of this application.

As shown in FIG. 12(a), the GUI is a navigation display interface in a navigation process to a camping place A. The navigation display interface includes a camping mode setting control 1201.

As shown in FIG. 12(b), when an operation of tapping the control 1201 by the user is detected, the vehicle may control the display 201 to display a camping state-of-charge management interface. The camping state-of-charge management interface includes information about a driving range (for example, the driving range is 355 km) corresponding to a state of charge of the vehicle and a planning result of the state of charge of the vehicle. The planning result includes information about a remaining outward trip, information about a return trip, a sleep duration, and a remaining available range. The information about the remaining outward trip includes information about a remaining range (for example, 20 km) from a current location of the vehicle to the destination. The information about the return trip includes a range (for example, 80 kilometers) from the destination to the home. The sleep duration is a duration that is of the in-vehicle sleep mode and that is predicted by the vehicle. The remaining available range is a range corresponding to a state of charge that can be used by the user in the discharge mode.

FIG. 12(b) further includes a plurality of state-of-charge bars. A state-of-charge bar corresponding to the remaining outward trip in FIG. 12(b) indicates a state of charge that needs to be consumed for the remaining range from the home to the destination. This is different from FIG. 11(b). In the process of leaving the home for the destination, a length of the state-of-charge bar corresponding to the remaining outward trip gradually becomes short.

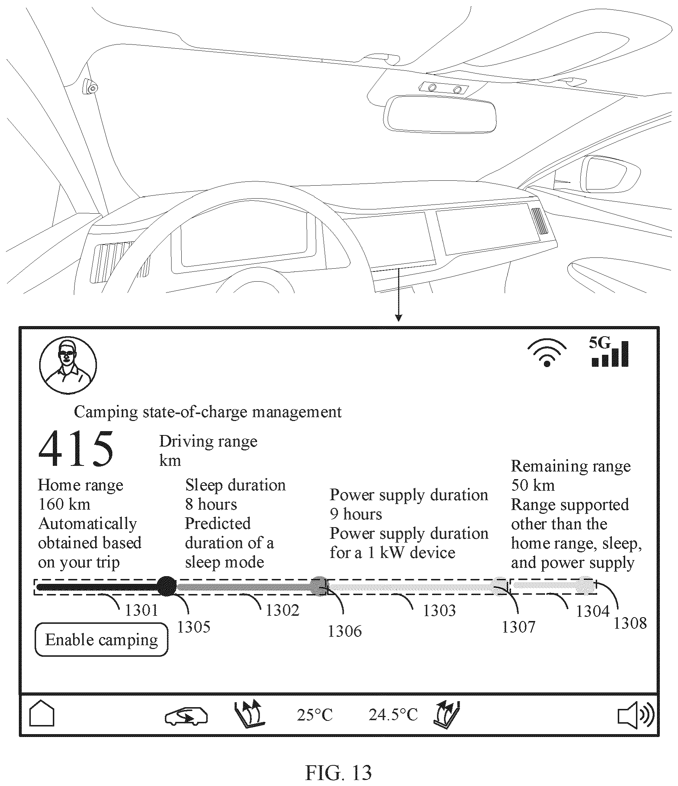

For example, FIG. 13 shows a GUI according to an embodiment of this application.

As shown in FIG. 13, the GUI is a camping state-of-charge management interface. Different from the GUI shown in FIG. 3(b), the vehicle may divide the state of charge into a state of charge corresponding to the home range, a state of charge corresponding to the in-vehicle sleep mode lasting for 8 hours, a state of charge corresponding to discharging lasting for 9 hours, and a state of charge corresponding to a remaining range.

The camping state-of-charge management interface may further include a state-of-charge bar 1301, a state-of-charge bar 1302, a state-of-charge bar 1303, and a state-of-charge bar 1304. The state-of-charge bar 1301 indicates a state of charge that needs to be consumed for the home range. The state-of-charge bar 1302 indicates a state of charge that needs to be consumed for the sleep mode lasting for 8 hours. The state-of-charge bar 1303 indicates a state of charge that needs to be consumed in the discharge mode lasting for 9 hours. The state-of-charge bar 1304 indicates a state of charge other than the state of charge corresponding to the home range, the state of charge corresponding to the in-vehicle sleep mode, and the state of charge corresponding to the discharge mode.

The camping state-of-charge management interface may further include a state-of-charge adjustment control 1305, a state-of-charge adjustment control 1306, a state-of-charge adjustment control 1307, and a state-of-charge adjustment control 1308. The state-of-charge adjustment control 1305 is configured to adjust the state of charge corresponding to the home range. The state-of-charge adjustment control 1306 is configured to adjust the state of charge corresponding to the sleep mode. The state-of-charge adjustment control 1307 is configured to adjust a state of charge that can be consumed in the discharge mode. The state-of-charge adjustment control 1308 is configured to adjust a state of charge other than the state of charge corresponding to the home range, the state of charge corresponding to the in-vehicle sleep mode, and the state of charge corresponding to the discharge mode.

In an embodiment, when an operation of sliding the state-of-charge adjustment control 1306 rightward by the user is detected, the state-of-charge bar 1302 may be controlled to be longer and the state-of-charge bar 1304 may be controlled to be shorter.

In an embodiment, when an operation of sliding the state-of-charge adjustment control 1307 rightward by the user is detected, the state-of-charge bar 1303 may be controlled to be longer and the state-of-charge bar 1304 may be controlled to be shorter.

In an embodiment, when an operation of sliding the state-of-charge adjustment control 1308 leftward by the user is detected, the state-of-charge bar 1304 may be controlled to be shorter and the state-of-charge bar 1302 and/or the state-of-charge bar 1303 may be controlled to be longer.

In an embodiment, controlling the state-of-charge bar 1302 and/or the state-of-charge bar 1303 to be longer includes: controlling, based on a distance at which the state-of-charge adjustment control 1308 slides leftward and a historical camping record of the user, the state-of-charge bar 1302 and/or the state-of-charge bar 1303 to be longer.

For a corresponding state of charge change when the foregoing state-of-charge bar becomes longer or shorter, refer to the description in the foregoing embodiment.

The foregoing describes the GUIs provided in embodiments of this application with reference to FIG. 3(a) to FIG. 13. With reference to the accompanying drawings, the following describes a control method, a system, and a control apparatus provided in embodiments of this application.

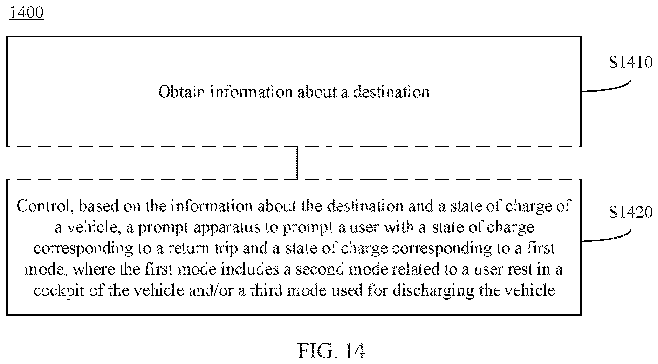

FIG. 14 is a schematic flowchart of a control method 1400 according to an embodiment of this application. The method 1400 may be performed by a vehicle, or the method 1400 may be performed by the foregoing computing platform (for example, an in-vehicle infotainment platform), or the method 1400 may be performed by a system including a computing platform and a prompt apparatus, or the method 1400 may be performed by a system-on-a-chip (system-on-a-chip, SoC) on the foregoing computing platform, or the method 1400 may be performed by a processor on the computing platform. The method 1400 includes the following steps.

S1410: Obtain information about a destination.

Optionally, obtaining the information about the destination includes: obtaining the information about the destination when it is detected that the vehicle arrives at the destination.

For example, as shown in FIG. 3(a), when the vehicle arrives at a camping place A, the vehicle may obtain information about the camping place A and prompt the user whether to enable camping mode setting.

Optionally, obtaining the information about the destination includes: obtaining the information about the destination when it is detected that the user is navigated to the destination by using a navigation application and the destination can be used for camping by the user.

For example, when it is detected that the user is navigated to the camping place A by using an in-vehicle navigation application, the vehicle may obtain the information about the camping place A.

S1420: Control, based on the information about the destination and a state of charge of the vehicle, a prompt apparatus to prompt the user with a state of charge corresponding to a return trip and a state of charge corresponding to a first mode, where the first mode includes a second mode related to a user rest in a cockpit of the vehicle and/or a third mode used for discharging the vehicle.

For example, the prompt apparatus includes a display apparatus and/or a sound-making apparatus. For example, the display apparatus may be the display 201, and the sound-making apparatus may be an in-vehicle speaker or an in-vehicle sound box.

For example, the first mode may be a camping mode or an outdoor mode.

For example, the second mode may be an in-vehicle sleep mode, a nap mode, an in-vehicle camping mode, or a rest mode.

For example, the third mode may be a discharge mode, an out-of-vehicle camping mode, an out-of-vehicle barbecue mode, an out-of-vehicle projection mode, or an out-of-vehicle karaoke mode.

Optionally, before controlling the prompt apparatus to prompt the user with the state of charge corresponding to the return trip and the state of charge corresponding to the first mode, the method 1400 further includes: controlling the prompt apparatus to prompt the user whether to enable the camping mode setting.

For example, the prompt information in the prompt box 301 shown in FIG. 3(a) may be used to prompt the user whether to enable the camping mode setting. When an operation that the user determines to enable the camping mode setting (for example, an operation of tapping the control 302 by the user) is detected, the display 201 may prompt the user with the state of charge corresponding to the return trip, a state of charge corresponding to the sleep mode, and a state of charge corresponding to the discharge mode. Alternatively, when it is detected that the user arrives at the camping place A, there is no need to prompt the user whether to enable the camping mode setting. Instead, the display 201 is directly controlled to display a camping state-of-charge management interface.

The foregoing example is described by using an example in which the first mode includes the in-vehicle sleep mode and the discharge mode. This embodiment of this application is not limited thereto. For example, the first mode may include only the second mode related to the user rest in the cockpit of the vehicle. For another example, the first mode may include only the third mode used for discharging the vehicle.

Optionally, the first mode includes the second mode and the third mode, and controlling, based on the information about the destination and the state of charge of the vehicle, the prompt apparatus to prompt the user with the state of charge corresponding to the return trip and the state of charge corresponding to the first mode includes: controlling, based on the information about the destination, the state of charge of the vehicle, and a historical camping record of the user, the prompt apparatus to prompt the user with the state of charge corresponding to the return trip, the state of charge corresponding to the second mode, and the state of charge corresponding to the third mode.

For example, the state of charge of the vehicle is 80%, a state of charge corresponding to a home range is 20%, and the historical camping record of the user indicates that a half of a state of charge consumed by the user during camping in a past period of time (for example, half a year) is used for the in-vehicle sleep mode and the other half is used for the discharge mode. In this case, the vehicle may control the display 201 to display the state of charge corresponding to the in-vehicle sleep mode being 30% and the state of charge corresponding to the discharge mode being 30%.

The state of charge being 80% may be understood as a proportion of an available state of charge of a battery to a nominal capacity of the battery being 80%. The state of charge corresponding to the home range being 20% may be understood as a proportion of a state of charge that needs to be consumed from the camping place A to the home to the nominal capacity of the battery being 20%. The state of charge corresponding to the in-vehicle sleep mode being 30% may be understood as a proportion of a state of charge allocated to the in-vehicle sleep mode to the nominal capacity of the battery being 30%. The state of charge corresponding to the discharge mode being 30% may be understood as a proportion of a state of charge allocated to the discharge mode to the nominal capacity of the battery being 30%.

Optionally, the first mode includes the second mode and the third mode, and the method 1400 further includes: when it is detected that the user increases the state of charge corresponding to the second mode, keeping the state of charge corresponding to the return trip unchanged and decreasing the state of charge corresponding to the third mode; or when it is detected that the user increases the state of charge corresponding to the third mode, keeping the state of charge corresponding to the return trip unchanged and decreasing the state of charge corresponding to the second mode.

For example, as shown in FIG. 5(a) and FIG. 5(b), when an operation of increasing the state of charge corresponding to the in-vehicle sleep mode by the user is detected, the state of charge corresponding to the home range may be kept unchanged and the state of charge corresponding to the discharge mode may be decreased.

Optionally, the method 1400 further includes: when it is detected that the user increases an input of the state of charge corresponding to the first mode, decreasing the state of charge corresponding to the return trip; and when the state of charge corresponding to the return trip cannot enable the vehicle to travel to a charging station closest to the destination, controlling the prompt apparatus to inform the user that the state of charge corresponding to the return trip cannot enable the vehicle to travel to the charging station.

For example, as shown in FIG. 7(a) and FIG. 7(b), when it is detected that the user increases the state of charge corresponding to the in-vehicle sleep mode, the state of charge corresponding to the home range may be decreased. When it is detected that the state of charge corresponding to the home range cannot enable the vehicle to travel to the charging station closest to the destination, the display 201 may be controlled to inform the user that the home range cannot ensure that the user drives the vehicle to the closest charging station.

Optionally, the first mode includes the second mode and the third mode, and the method 1400 further includes: when it is detected that the user adjusts the input of the state of charge corresponding to the return trip, adjusting, based on the historical camping record of the user, the state of charge corresponding to the second mode and/or the state of charge corresponding to the third mode.

For example, as shown in FIG. 6(a) and FIG. 6(b), when it is detected that the user increases the state of charge corresponding to the home range, the state of charge corresponding to the in-vehicle sleep mode and/or the state of charge corresponding to the discharge mode may be reduced based on the historical camping record of the user.

For example, the historical camping record of the user indicates that a duration of using the in-vehicle sleep mode when the user drives the vehicle for camping in a past period of time (for example, half a year) is greater than a duration of using the discharge mode. In this case, when an operation of increasing the state of charge corresponding to the home range by the user is detected, the state of charge corresponding to the in-vehicle sleep mode may be kept unchanged and the state of charge corresponding to the discharge mode may be decreased.

For example, the historical camping record of the user indicates that a state of charge consumed in the in-vehicle sleep mode when the user drives the vehicle for camping in a past period of time (for example, half a year) is greater than a state of charge consumed in the discharge mode. In this case, when an operation of increasing the state of charge corresponding to the home range by the user is detected, the state of charge corresponding to the in-vehicle sleep mode may be kept unchanged and the state of charge corresponding to the discharge mode may be decreased.

Optionally, the vehicle includes a range extender, the first mode includes the second mode, and the method 1400 further includes: when the state of charge corresponding to the second mode cannot enable the second mode to last for a first preset duration, controlling the range extender to generate power.

For example, the second mode is the in-vehicle sleep mode, and the first preset duration is 10 hours. If a state of charge allocated by the vehicle to the in-vehicle sleep mode (for example, the state of charge allocated to the in-vehicle sleep mode can enable the in-vehicle sleep mode to continuously run for 8 hours) cannot enable the in-vehicle sleep mode to continuously run for 10 hours, the vehicle may control the range extender to generate power. The vehicle can allocate a state of charge supplemented by the range extender to the in-vehicle sleep mode, to ensure that the in-vehicle sleep mode can continuously run for 10 hours.

Optionally, controlling the range extender to generate the power includes: when the state of charge corresponding to the in-vehicle sleep mode is about to be used up, controlling the range extender to generate the power.

For example, the state of charge that corresponds to the in-vehicle sleep mode and that is allocated by the vehicle for the user can enable the in-vehicle sleep mode to continuously run for 8 hours. When a duration in which the in-vehicle sleep mode continuously runs is nearly 8 hours (for example, continuously runs for 7 hours and 50 minutes), a camera in the cockpit may be controlled to be turned on, to obtain an image captured by the camera in the cockpit. If it is determined, based on the image, that the user is in a sleep state, the range extender may be controlled to generate power, so that the in-vehicle sleep mode continuously runs. If it is determined, based on the image, that the user is switched from a sleep state to an awake state, the user may be informed that the in-vehicle sleep mode is to be disabled and power generation performed by the range extender is stopped. In this way, when the state of charge allocated to the in-vehicle sleep mode is about to be used up and the user is in the sleep state, the range extender may be controlled to generate power to ensure continuous running of the in-vehicle sleep mode, to ensure sleep quality of the user.

Optionally, when the user is in the awake state, the prompt apparatus may be controlled to inform the user that power generation is being performed by the range extender to ensure continuous running of the in-vehicle sleep mode.

Optionally, when the user is in the awake state, the prompt apparatus may be controlled to prompt the user whether to exit the in-vehicle sleep mode and stop power generation performed by the range extender.

Optionally, the first preset duration may be determined based on the historical camping record of the user.

Optionally, controlling the range extender to generate the power includes: before the second mode is enabled, controlling the range extender to generate the power.

For example, as shown in FIG. 10, before it is detected that the user taps the control 1001 and the in-vehicle sleep mode is enabled, the range extender may be controlled to generate power, to ensure that the in-vehicle sleep mode can continuously run for 10 hours. In this way, noise caused due to power generation performed by the range extender when the state of charge corresponding to the in-vehicle sleep mode is about to be used up is avoided, to facilitate improvement of sleep quality of the user in the sleep state, thereby helping improve use experience of the user when the user uses the in-vehicle sleep mode.

Optionally, the state of charge corresponding to the second mode is a first state of charge, and the method 1400 further includes: when a state of charge consumed in the second mode reaches the first state of charge, exiting the second mode.

For example, the second mode is the in-vehicle sleep mode. When the in-vehicle sleep mode is enabled, the vehicle may turn on a cockpit device such as an air conditioner, an atmosphere light, a fragrance, and a speaker. When the state of charge corresponding to the in-vehicle sleep mode is about to be used up, the in-vehicle sleep mode may be automatically exited.

That the vehicle exits the in-vehicle sleep mode includes: turning off a cockpit device related to the in-vehicle sleep mode.

Optionally, the method 1400 further includes: controlling the prompt apparatus to inform the user that the vehicle has exited the second mode; and/or controlling a vehicle window of the vehicle to be opened.

For example, as shown in FIG. 8(c), after the in-vehicle sleep mode is exited, the display 201 may be controlled to display prompt information. The prompt information is used to inform the user that the vehicle has exited the in-vehicle sleep mode and that the vehicle window has been opened for the user.

Optionally, the vehicle includes the range extender, the first mode includes the third mode, and the method 1400 further includes: when the state of charge corresponding to the third mode cannot enable the third mode to last for a second preset duration, controlling the range extender to generate power.

For example, the third mode is the discharge mode. When the state of charge corresponding to the discharge mode cannot ensure that a device whose power is 1 kW continuously consumes power for 10 hours, the vehicle may control the range extender to generate power, so that the device whose power is 1 kW continuously consumes power for 10 hours.

Optionally, the method 1400 further includes: when the state of charge corresponding to the third mode is about to be used up, turning on a camera outside the cockpit and obtaining an image captured by the camera outside the cockpit; and when it is determined, based on the image, that the user still uses a power-consuming device, controlling the range extender to generate power. The state of charge supplemented by the range extender can also be further used for continuous running of the discharge mode.

Optionally, the state of charge corresponding to the third mode is a second state of charge, and the method 1400 further includes: when a state of charge consumed in the third mode reaches the second state of charge, controlling the vehicle to stop discharging.

For example, when the state of charge corresponding to the discharge mode is about to be used up, discharging may be stopped.

Optionally, when the state of charge corresponding to the discharge mode is about to be used up, the vehicle may send prompt information to a mobile terminal (for example, a mobile phone) of the user. The prompt information is used to inform the user that the state of charge corresponding to the discharge mode is about to be used up. The mobile phone may inform, in a manner of vibration, ringing, or a voice prompt, the user that the state of charge corresponding to the discharge mode is about to be used up.

Alternatively, after the vehicle completes planning of the state of charge, the vehicle may send a planning result of the state of charge to the mobile phone. When the state of charge corresponding to the discharge mode is about to be used up, the user is informed in a manner of vibration, ringing, or a voice prompt of the mobile phone that the state of charge corresponding to the discharge mode is about to be used up.

Optionally, if the vehicle includes the range extender, the user is informed by using the mobile phone that the state of charge corresponding to the discharge mode is about to be used up, and the user may be further informed that the vehicle is about to start the range extender to automatically supplement state of charge.

Optionally, when the mobile phone detects an operation of decreasing the state of charge corresponding to the in-vehicle sleep mode by the user, the mobile phone may send state-of-charge adjustment information to the vehicle. In this way, the vehicle may decrease the state of charge corresponding to the in-vehicle sleep mode and increase the state of charge corresponding to the discharge mode, to ensure that the user can continue to use the discharge mode.

Optionally, a state-of-charge management display interface of the mobile phone includes a control indicating whether to start the range extender to generate power. When the mobile phone detects an operation of starting, by the user, the range extender to generate power, the mobile phone may send indication information to the vehicle. The indication information is used to indicate the vehicle to start the range extender to generate power and use the state of charge supplemented by the range extender for the discharge mode.

Optionally, obtaining the information about the destination includes: obtaining the information about the destination before the vehicle travels to the destination; and controlling, based on the information about the destination and the state of charge of the vehicle, the prompt apparatus to prompt the user with the state of charge corresponding to the return trip and the state of charge corresponding to the first mode includes: controlling, based on the information about the destination and the state of charge of the vehicle, the prompt apparatus to prompt the user with a state of charge corresponding to an outward trip, the state of charge corresponding to the return trip, and the state of charge corresponding to the first mode.

For example, as shown in FIG. 11(a) and FIG. 11(b), when it is detected before the vehicle leaves that the user inputs the information about the destination by using a navigation application, the vehicle may obtain the information about the destination and prompt the user to enable the camping mode setting. When an operation of determining, by the user, to enable the camping mode setting is detected, the state of charge corresponding to the outward trip, the state of charge corresponding to the return trip, the state of charge corresponding to the in-vehicle sleep mode, and the state of charge corresponding to the discharge mode may be displayed.

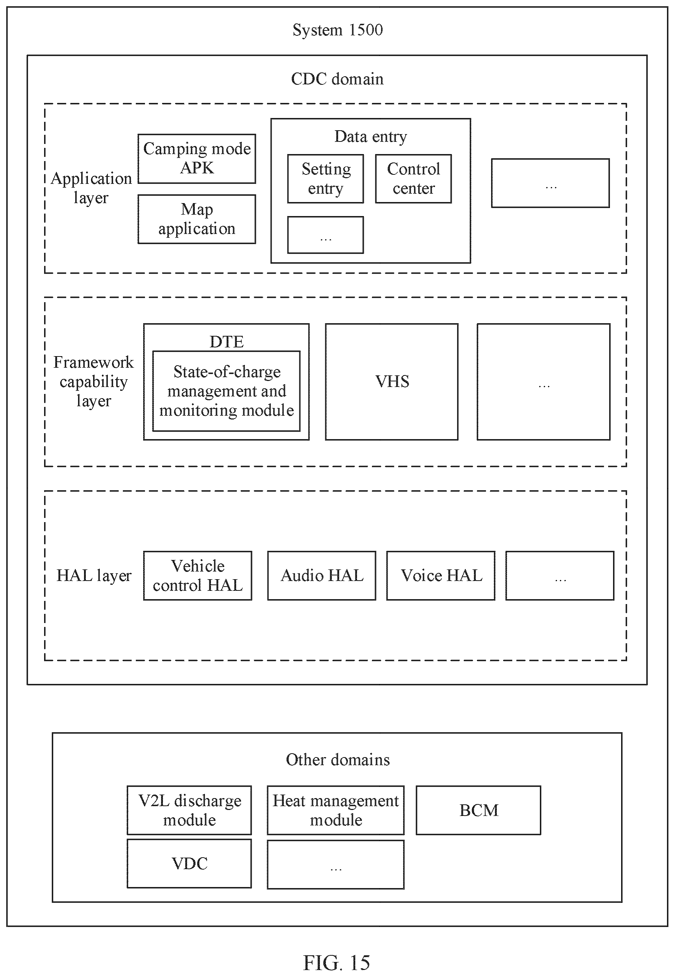

FIG. 15 is a block diagram of a system 1500 according to an embodiment of this application. As shown in FIG. 15, the system 1500 includes an intelligent cockpit domain controller (cockpit domain controller, CDC) domain and other domains. The CDC domain includes an application layer, a framework capability layer, and a hardware abstraction layer (hardware abstract layer, HAL).

The foregoing CDC may be located on a computing platform of a vehicle.

The application layer includes a data entry, a camping mode application package (application package, APK), and a map application. The data entry includes a setting entry, a control center, and the like.

The framework capability layer includes a driving travel engine (driving travel engine, DTE), a vehicle hardware service (vehicle hardware service, VHS), and the like. The DTE includes a state-of-charge management and monitoring module. The state-of-charge management and monitoring module is used to evaluate, by using a state-of-charge evaluation algorithm, a state of charge corresponding to a home range, a state of charge corresponding to an in-vehicle sleep mode, and a state of charge corresponding to a remaining available range. The VHS stores latest range information. For example, if a location of the vehicle when the vehicle is powered on last time is a home, and a location of the vehicle when the vehicle is powered off last time is a camping place A, a range from the home to the camping place A in latest power-on/off information may be used as a home range from the camping place to the home. In addition, the VHS may further request, from a vehicle domain controller, information about a state of charge of the vehicle, a remaining fuel quantity of the vehicle, and the like.

For another example, the VHS may determine, based on home information set in a navigation application, a state of charge corresponding to the home range.

The HAL layer includes a vehicle control HAL, an audio HAL, a voice HAL, and the like.

The other domains include a vehicle-to-load (vehicle-to-load, V2L) discharge module, a heat management module, a body control module (body control module, BCM), a vehicle domain controller (vehicle domain controller, VDC), and the like. The V2L discharge module is configured to control a high voltage V2L. The heat management module is configured to control an air conditioner. The VDC may be configured to implement vehicle function control.

It should be understood that the V2L discharge module and the heat management module may be independent modules, or may be integrated into the VDC.

The cockpit domain controller, the vehicle domain controller, and the like in this embodiment of this application may have other names. In this application, the CDC, the VDC, and the like are merely used as examples, and do not limit a specific implementation.

The CDC and the other domains may communicate through a controller area network (controller area network, CAN).

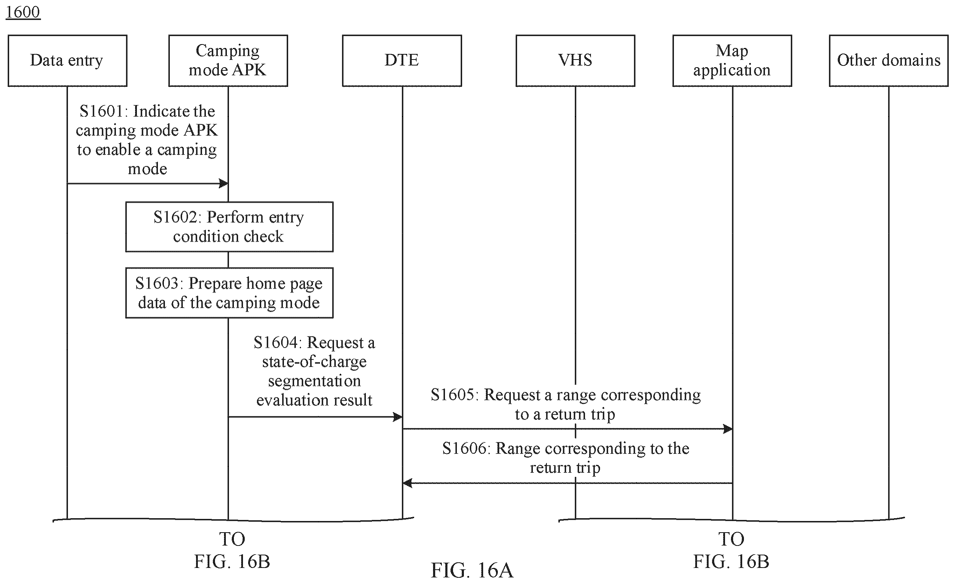

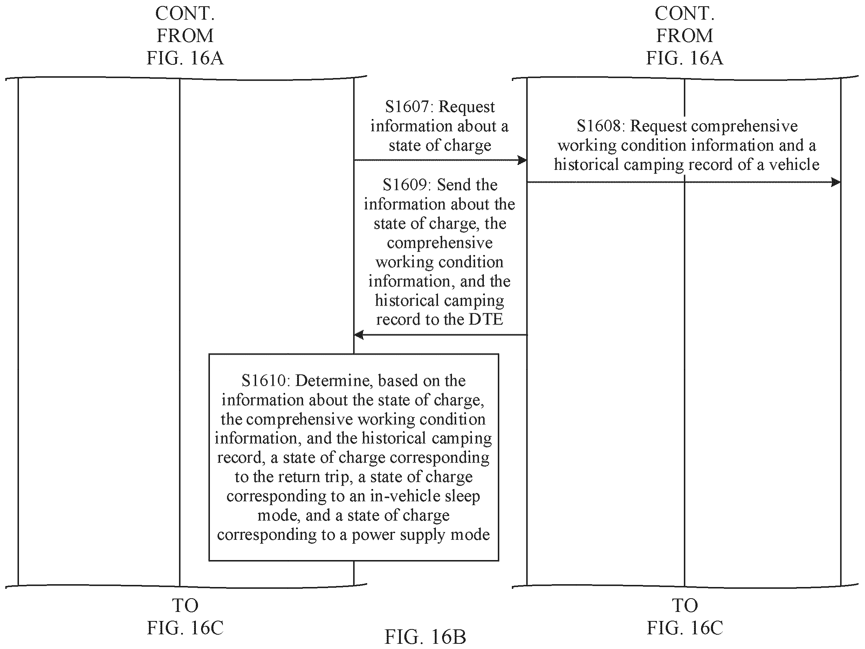

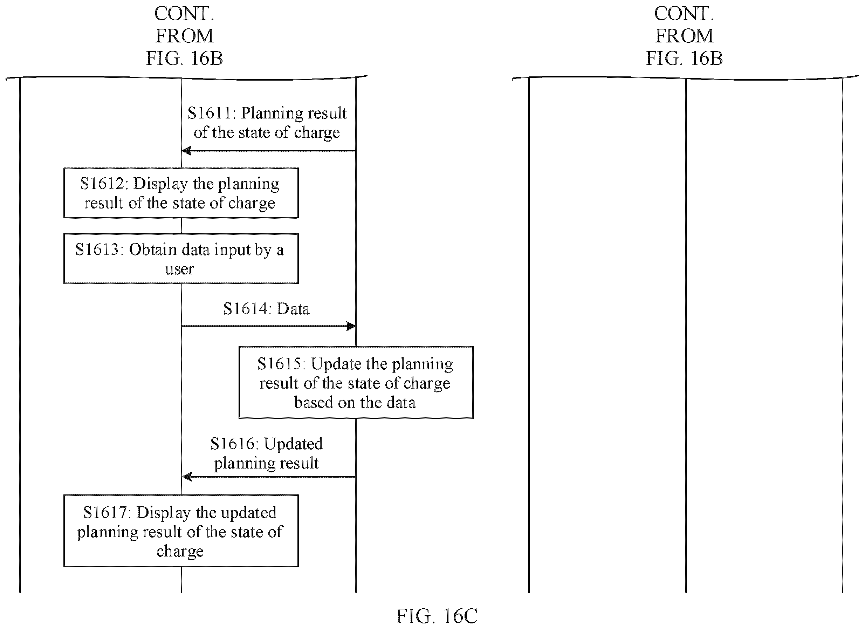

FIG. 16A, FIG. 16B, and FIG. 16C are a schematic flowchart of a control method 1600 according to an embodiment of this application. The method 1600 may be executed by each module in the CDC. The method 1600 includes the following steps.

S1601: The data entry indicates the camping mode APK to enable a camping mode.

For example, as shown in FIG. 3(a), when an operation of tapping the control 302 by the user is detected, the data entry may indicate the camping mode APK to enable the camping mode.

S1602: The camping mode APK performs entry condition check.

For example, that the camping mode APK performs entry condition check includes that the camping mode APK checks whether the vehicle is in a park gear. When the vehicle is in the park gear, S1603 may be performed.

For example, that the camping mode APK performs entry condition check includes that the camping mode APK checks whether the vehicle is running another parallel conflicting mode. For example, the another parallel conflict mode includes an exhibition hall mode, a car washing mode, or a temporary parking mode. When it is determined that the vehicle does not run the another parallel conflicting mode, S1603 may be performed.

S1603: The camping mode APK prepares home page data of the camping mode.

For example, the home page data of the camping mode includes a driving range corresponding to a state of charge of the vehicle, a range corresponding to a return trip, a duration of an in-vehicle sleep mode, a remaining available range, a state-of-charge bar corresponding to the return trip, a state-of-charge bar corresponding to the in-vehicle sleep mode, a state-of-charge bar corresponding to the remaining available range, a control for setting a minimum state of charge, and a control for enabling the camping mode.

S1604: The camping mode APK requests a state-of-charge segmentation evaluation result from the DTE.

Optionally, after receiving the state-of-charge segmentation evaluation result, the DTE may perform segmentation evaluation on the state of charge of the vehicle, that is, divide the state of charge into the state of charge corresponding to the return trip, the state of charge corresponding to the in-vehicle sleep mode, and the state of charge corresponding to the remaining available range (or a state of charge corresponding to a discharge mode).

Optionally, if it is detected that the camping mode is enabled before the vehicle arrives at a camping place, the DTE may further divide the state of charge into a state of charge corresponding to an outward trip, the state of charge corresponding to the return trip, the state of charge corresponding to the in-vehicle sleep mode, and the state of charge corresponding to the remaining available range.

S1605: The DTE requests, from a map application, a range corresponding to the return trip.

For example, before the vehicle leaves a home for a camping place A, the camping mode is enabled, and the DTE may further request, from the map application, the range corresponding to the outward trip.

For example, in a process in which the vehicle leaves a home for a camping place A, the camping mode is enabled, and the DTE may further request, from the map application, the remaining range corresponding to the outward trip.

S1606: The map application sends, to the DTE, the range corresponding to the return trip.

For example, the map application stores information about a path from the home to the camping place A and information about a path from the camping place A to the home. The path information may be a user preferred path or a default preferred path. For example, there are three paths from the home to the camping place A: a path 1 (with a range of 80 km), a path 2 (with a range of 100 km), and a path 3 (with a range of 120 km). In past half a year, the user selects the path 1 most frequently when driving the vehicle from the camping place A to the home. In this case, the map application may send range information (80 km) corresponding to the return trip to the DTE.

For example, when the camping mode is enabled before the vehicle leaves the home for the camping place A, and the user has planned a path (for example, the path 2) from the home to the camping place A by using the navigation application, the map application may send, to the DTE, information about a remaining range (for example, 100 km) corresponding to the outward trip. In a process in which the user drives the vehicle, the map application may further send, to the DTE in real time, information about a remaining range (for example, the remaining range from a current location to the camping place A is 60 km) corresponding to the outward trip.

For example, when the camping mode is enabled in a process in which the vehicle leaves the home for the camping place A, and the user has planned a path (for example, the path 2) from the home to the camping place A by using the navigation application, the map application may periodically send, to the DTE, information about a remaining range corresponding to the outward trip.

S1607: The DTE requests information about the state of charge from the VHS.

Optionally, if the vehicle includes a range extender, the DTE may further request information about a remaining fuel quantity from the VHS.

After receiving the request of the DTE, the VHS may request the state of charge of the vehicle from the other domains. The VHS may receive the information about the state of charge sent by the other domains.

S1608: The VHS requests comprehensive working condition information and a historical camping record of the vehicle from the other domains.

For example, the comprehensive working condition information includes state of charge consumption information of the vehicle in a past period of time (for example, one month). For example, the state of charge consumption information includes state of charge consumption information of the vehicle in a running process. The historical camping record includes information about consumed state of charge and a state-of-charge consumption duration of the in-vehicle sleep mode, and/or information about consumed state of charge and a state-of-charge consumption duration of the discharge mode.

S1609: The VHS sends the information about the state of charge, the comprehensive working condition information, and the historical camping record to the DTE.

Optionally, if the vehicle includes the range extender, the VHS may further send the information about the remaining fuel quantity to the DTE.

S1610: The DTE determines, based on the information about the state of charge, the comprehensive working condition information, and the historical camping record, the state of charge corresponding to the return trip, the state of charge corresponding to the in-vehicle sleep mode, and the state of charge corresponding to the discharge mode.

For example, the path 1 from the camping place A to the home includes a 20 km slope-climbing road section, and the DTE may determine, with reference to state of charge consumption information of the vehicle on the slope-climbing road section in the comprehensive working condition information, a state of charge that needs to be consumed from the camping place A to the home.

For example, the DTE may determine, based on the state of charge of the vehicle and the state of charge that needs to be consumed from the camping place A to the home, the state of charge corresponding to the camping mode. The DTE may allocate, based on the historical camping record, the state of charge corresponding to the camping mode, to obtain the state of charge corresponding to the in-vehicle sleep mode and the state of charge corresponding to the discharge mode. For example, in past 10 camping processes, if a ratio of a state of charge consumed when the user uses the in-vehicle sleep mode in the vehicle to a state of charge consumed when the user uses the discharge mode in the vehicle is 1:1, the DTE may allocate a half of the state of charge corresponding to the camping mode to the in-vehicle sleep mode, and allocate the other half to the discharge mode.

Optionally, before the vehicle leaves the home for the camping place A, the camping mode is enabled, and the DTE may further plan the state of charge that needs to be consumed from the home to the camping place A. For example, the path 1 from the home to the camping place A includes a 50 km highway, and the DTE may determine, with reference to state of charge consumption information of the vehicle when the vehicle travels on the highway in the comprehensive working condition information, a state of charge that needs to be consumed from the home to the camping place A.

S1611: The DTE sends a planning result of a state of charge to the camping mode APK.

For example, the planning result of the state of charge includes display data of a state-of-charge segment.

S1612: The camping mode APK displays the planning result of the state of charge by using a display.

For example, as shown in FIG. 3(b), the state-of-charge bars 303 to 305 may be displayed on the camping state-of-charge management interface.

For example, when the state of charge that corresponds to the in-vehicle sleep mode and that is included in the planning result cannot support the in-vehicle sleep mode in lasting for 10 hours, the user may be informed that the state of charge corresponding to the in-vehicle sleep mode cannot support the in-vehicle sleep mode in lasting for 10 hours.

For example, when the state of charge that corresponds to the discharge mode and that is included in the planning result cannot support 10-hour continuous power consumption of a 1 kW power-consuming device, the user may be informed that the state of charge corresponding to the discharge mode cannot support 10-hour continuous power consumption of the 1 kW power-consuming device.

S1613: The camping mode APK obtains data input by the user.

For example, as shown in FIG. 5(a), the data input by the user is data of dragging the control 307 rightward by the user, and the data includes a sliding distance of dragging the control 307 rightward by the user.

S1614: The camping mode APK sends the data to the DTE.

S1615: The DTE updates the planning result of the state of charge based on the data.

For example, as shown in FIG. 5(a) and FIG. 5(b), based on the sliding distance at which the user drags the control 307 rightward, the DTE may keep the state of charge corresponding to the return trip unchanged, increase the state of charge corresponding to the in-vehicle sleep mode, and decrease the state of charge corresponding to the discharge mode.

For example, as shown in FIG. 6(a) and FIG. 6(b), based on the sliding distance at which the user drags the control 306 rightward and the historical camping record of the user, the DTE may increase the state of charge corresponding to the return trip, and decrease the state of charge corresponding to the in-vehicle sleep mode and/or the state of charge corresponding to the discharge mode.

For example, as shown in FIG. 7(a) and FIG. 7(b), based on the sliding distance at which the user drags the control 307 rightward, the DTE may keep the state of charge corresponding to the discharge mode unchanged, increase the state of charge corresponding to the in-vehicle sleep mode, and decrease the state of charge corresponding to the return trip.

S1616: The DTE sends an updated planning result to the camping mode APK.

S1617: The camping mode APK displays the updated planning result of the state of charge by using the display.

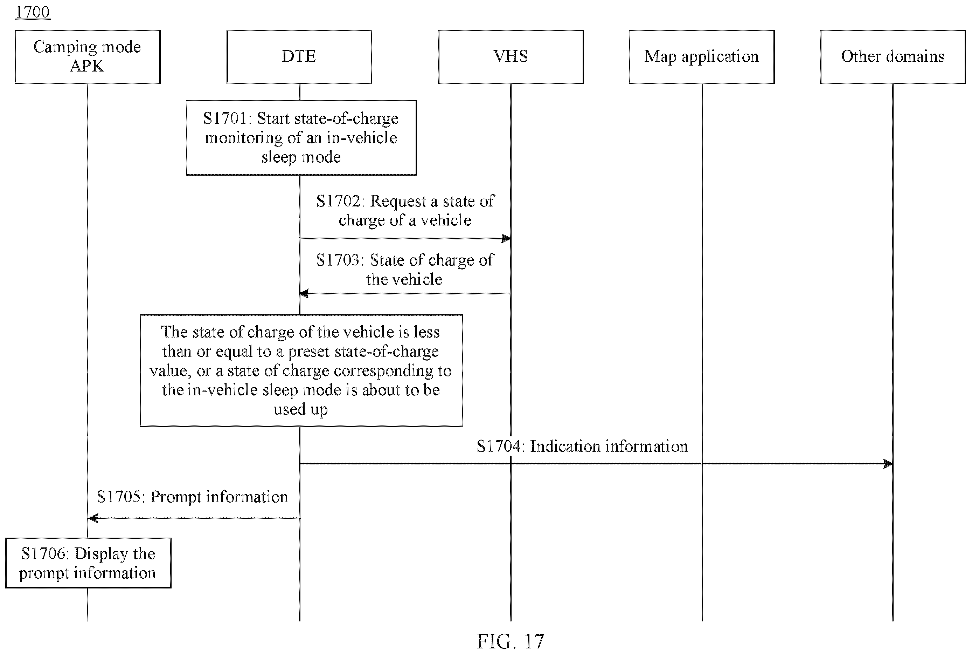

FIG. 17 is a schematic flowchart of a control method 1700 according to an embodiment of this application. The method 1700 may be executed by each module in the CDC. The method 1700 includes the following steps.

S1701: The DTE starts state-of-charge monitoring of an in-vehicle sleep mode.

For example, when the camping mode APK obtains an input of enabling the in-vehicle sleep mode by the user, the camping mode APK may send indication information to the DTE, where the indication information is used to indicate the DTE to enable state-of-charge monitoring of the in-vehicle sleep mode.

S1702: The DTE requests a state of charge of a vehicle from the VHS.

Optionally, after receiving the request of the DTE, the VHS may request the state of charge of the vehicle from the other domains. The other domains may periodically send information about the state of charge to the VHS.

S1703: The VHS sends the state of charge of the vehicle to the DTE.

Optionally, after the VHS receives the request of the DTE, the VHS may periodically send the state of charge of the vehicle to the DTE; or when the state of charge changes, the VHS may send the state of charge of the vehicle to the DTE.

S1704: When the state of charge of the vehicle is less than or equal to a preset state-of-charge value, or when a state of charge corresponding to the in-vehicle sleep mode is about to be used up, the DTE sends indication information to the other domains, where the indication information is used to indicate to turn off a cockpit device such as an air conditioner and open a vehicle window.

For example, the indication information may be further used to indicate the vehicle to enable a ventilation function.

For example, the preset state-of-charge value may be a default value, or the preset state-of-charge value may be set by the user. For example, the preset state-of-charge value is 20%.

S1705: The DTE sends prompt information to the camping mode APK, where the prompt information is used to inform the user that the vehicle has exited the in-vehicle sleep mode.

S1706: The camping mode APK displays the prompt information by using a display.

It should be understood that there is no actual sequence between S1704 and S1705.

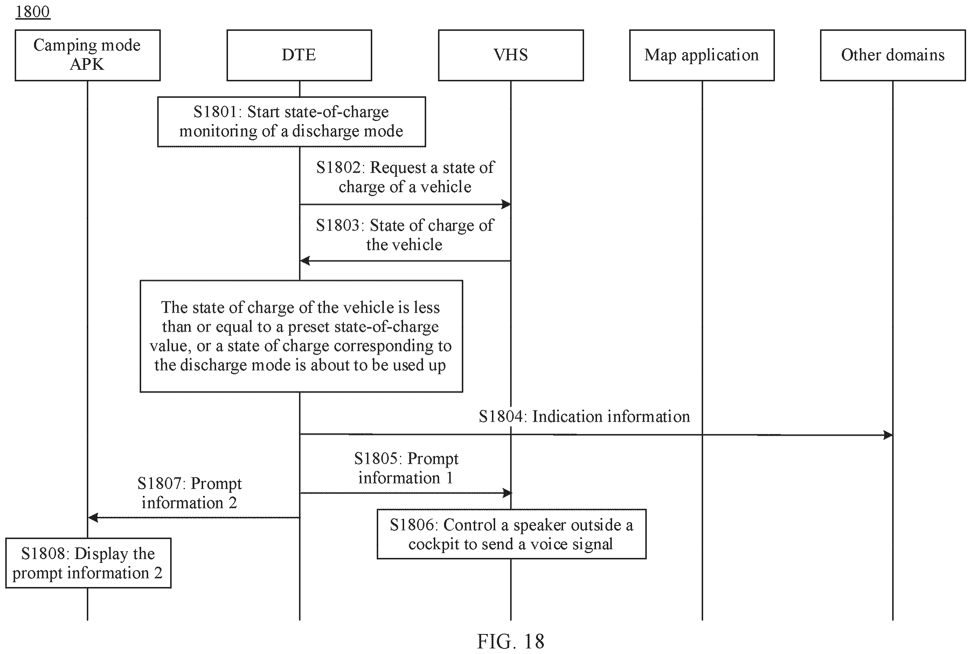

FIG. 18 is a schematic flowchart of a control method 1800 according to an embodiment of this application. The method 1800 may be executed by each module in the CDC. The method 1800 includes the following steps.

S1801: The DTE starts state-of-charge monitoring of a discharge mode.

For example, when the camping mode APK obtains an input of enabling the discharge mode by a user, the camping mode APK may send indication information to the DTE, where the indication information is used to indicate the DTE to enable state-of-charge monitoring of the discharge mode.

S1802: The DTE requests a state of charge of a vehicle from the VHS.

Optionally, after receiving the request of the DTE, the VHS may request the state of charge of the vehicle from the other domains. The other domains may periodically send information about the state of charge to the VHS.

S1803: The VHS sends the state of charge of the vehicle to the DTE.

Optionally, after the VHS receives the request of the DTE, the VHS may periodically send the state of charge of the vehicle to the DTE; or when the state of charge changes, the VHS may send the state of charge of the vehicle to the DTE.

S1804: When the state of charge of the vehicle is less than or equal to a preset state-of-charge value, or when a state of charge corresponding to the discharge mode is about to be used up, the DTE sends indication information to the other domains, where the indication information is used to indicate to stop discharging.

For example, the DTE may send the indication information to a V2L discharge module. After receiving the indication information, the V2L discharge module may stop supplying state of charge to a power-consuming device.

For example, the preset state-of-charge value may be a default value, or the preset state-of-charge value may be set by the user. For example, the preset state-of-charge value is 20%.

S1805: The DTE sends prompt information 1 to the VHS, where the prompt information 1 is used to inform the user that the state of charge corresponding to the discharge mode is to be used up.

S1806: The VHS controls a speaker outside a cockpit to send a voice signal, where the voice signal is used to inform the user that the state of charge corresponding to the discharge mode is to be used up.

S1807: The DTE sends prompt information 2 to the camping mode APK, where the prompt information is used to inform the user that the vehicle has stopped discharging.

S1808: The camping mode APK displays the prompt information 2 by using a display.

It should be understood that there is no actual sequence between S1804, S1805 and S1806, and S1807 and S1808.

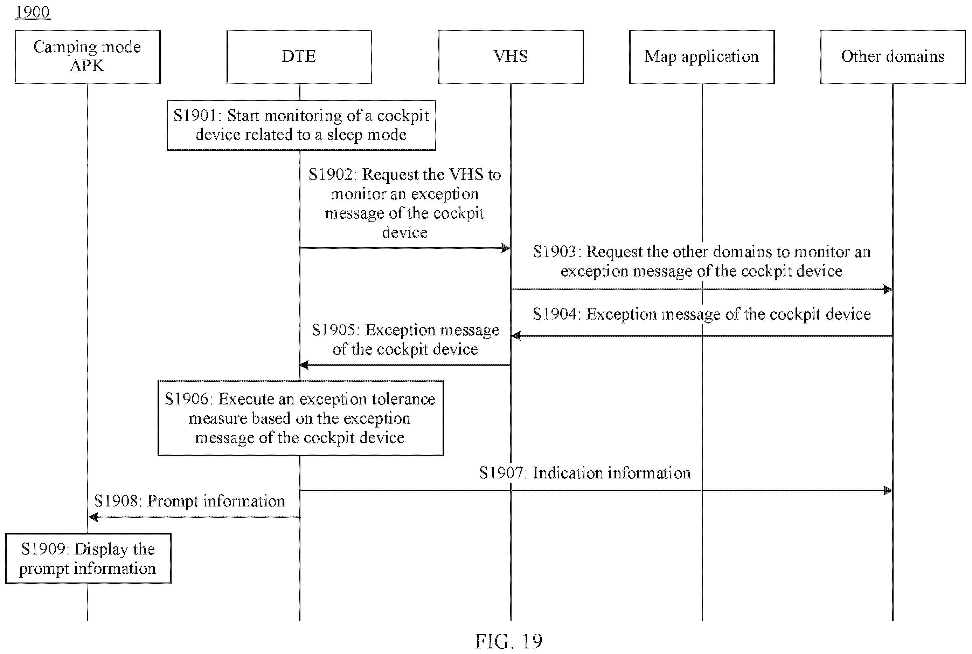

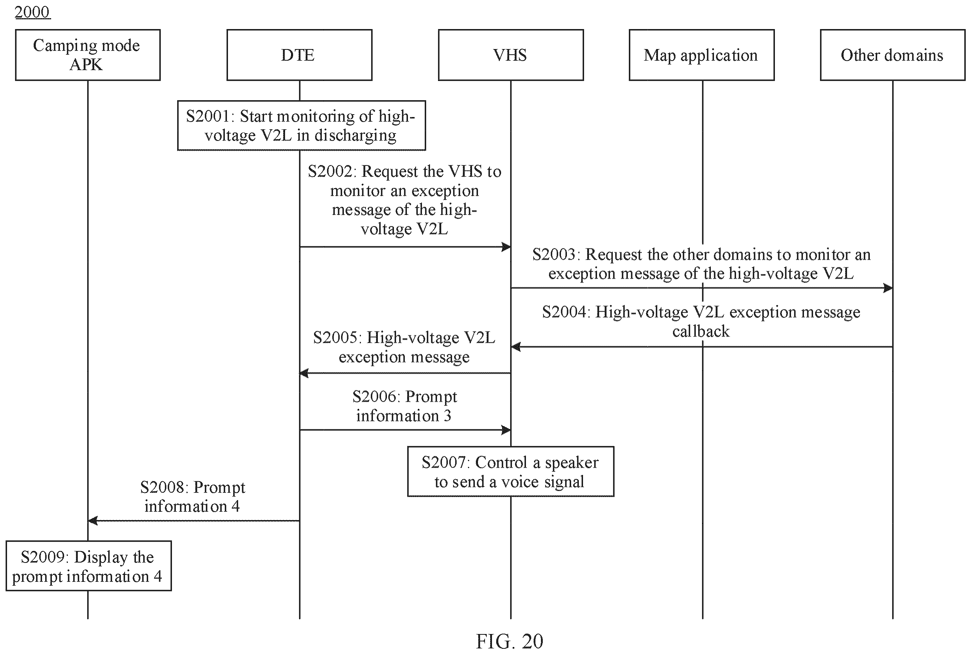

With reference to FIG. 17 and FIG. 18, the foregoing describes a control policy used when the in-vehicle sleep mode or the discharge mode is enabled. With reference to FIG. 19 and FIG. 20, the following describes a control policy used when a device is abnormal in a process of enabling the in-vehicle sleep mode or the discharge mode.

FIG. 19 is a schematic flowchart of a control method 1900 according to an embodiment of this application. The method 1900 may be executed by each module in a CDC. The method 1900 includes the following steps.

S1901: When an in-vehicle sleep mode is enabled, the DTE starts monitoring of a cockpit device related to the sleep mode.

For example, the cockpit device related to the sleep mode includes an air conditioner, an atmosphere light, and a speaker.

S1902: The DTE requests the VHS to monitor an exception message of the cockpit device.

S1903: The VHS requests the other domains to monitor an exception message of the cockpit device.

S1904: When an exception occurs on the cockpit device, the VHS obtains an exception message callback, sent by the other domains, of the cockpit device.

S1905: The VHS sends the exception message of the cockpit device to the DTE.

S1906: The DTE executes an exception tolerance measure based on the exception message of the cockpit device.

For example, the exception tolerance measure includes but is not limited to one or more of disabling a camping mode, opening a vehicle window (for example, controlling the window to be opened by 10%), and enabling circulation and ventilation.

S1907: The DTE sends indication information to the other domains, where the indication information is used to indicate to turn off the cockpit device such as an air conditioner and open the vehicle window.

S1908: The DTE sends prompt information to the camping mode APK, where the prompt information is used to inform the user that the vehicle has exited the in-vehicle sleep mode.

S1909: The camping mode APK displays the prompt information by using a display.

It should be understood that there is no actual sequence between S1907 and S1908.

FIG. 20 is a schematic flowchart of a control method 2000 according to an embodiment of this application. The method 2000 may be executed by each module in a CDC. The method 2000 includes the following steps.

S2001: When a discharge mode is enabled, the DTE starts monitoring of high-voltage V2L in discharging.

S2002: A DTE requests a VHS to monitor an exception message of the high-voltage V2L.

S2003: The VHS requests the other domains to monitor an exception message of the high-voltage V2L.

S2004: When an exception occurs in the high-voltage V2L, the VHS obtains a high-voltage V2L exception message callback sent by the other domains.

S2005: The VHS sends the high-voltage V2L exception message to the DTE.

S2006: The DTE sends prompt information 3 to the VHS, where the prompt information 3 is used to inform a user that an exception occurs in the high-voltage V2L.

S2007: The VHS may control a speaker to send a voice signal, where the voice signal is used to inform the user that an exception occurs in the high-voltage V2L.

S2008: The DTE sends prompt information 4 to the camping mode APK, where the prompt information 4 is used to inform the user that the vehicle has exited the discharge mode of the vehicle.

S2009: The camping mode APK displays the prompt information 4 by using a display.

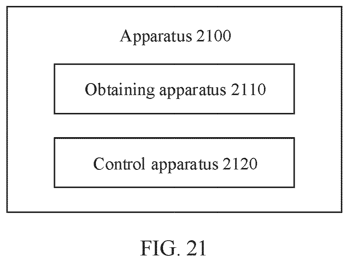

FIG. 21 is a block diagram of a control apparatus 2100 according to an embodiment of this application. As shown in FIG. 21, the apparatus 2100 includes: an obtaining unit 2110, configured to obtain information about a destination; and a control unit 2120, configured to control, based on the information about the destination and a state of charge of a vehicle, a prompt apparatus to prompt a user with a state of charge corresponding to a return trip and a state of charge corresponding to a first mode, where the first mode includes a second mode related to a user rest in a cockpit of the vehicle and/or a third mode used for discharging the vehicle.

Optionally, the first mode includes the second mode and the third mode, and the control unit 2120 is configured to control, based on the information about the destination, the state of charge of the vehicle, and a historical camping record of the user, the prompt apparatus to prompt the user with the state of charge corresponding to the return trip, a state of charge corresponding to the second mode, and a state of charge corresponding to the third mode.

Optionally, the apparatus 2100 further includes a detection unit and a state-of-charge adjustment unit. The state-of-charge adjustment unit is configured to: when the detection unit detects that the user increases the state of charge corresponding to the second mode, keep the state of charge corresponding to the return trip unchanged and decrease the state of charge corresponding to the third mode; or when the detection unit detects that the user increases the state of charge corresponding to the third mode, keep the state of charge corresponding to the return trip unchanged and decrease the state of charge corresponding to the second mode.

Optionally, the apparatus 2100 further includes a detection unit and a state-of-charge adjustment unit. The state-of-charge adjustment unit is configured to: when the detection unit detects that the user increases an input of the state of charge corresponding to the first mode, decrease the state of charge corresponding to the return trip. The control unit is further configured to: when the state of charge corresponding to the return trip cannot enable the vehicle to travel to a charging station closest to the destination, control the prompt apparatus to inform the user that the state of charge corresponding to the return trip cannot enable the vehicle to travel to the charging station.

Optionally, the vehicle includes a range extender, the first mode includes the second mode, and the control unit 2120 is further configured to: when the state of charge corresponding to the second mode cannot enable the second mode to last for a first preset duration, control the range extender to generate power.

Optionally, the control unit 2120 is configured to: before the second mode is enabled, control the range extender to generate the power.

Optionally, the state of charge corresponding to the second mode is a first state of charge; and the control unit 2120 is further configured to: when a state of charge consumed in the second mode reaches the first state of charge, exit the second mode.

Optionally, the control unit 2120 is further configured to: control the prompt apparatus to inform the user that the vehicle has exited the second mode; and/or control a vehicle window of the vehicle to be opened.

Optionally, the vehicle includes the range extender, the first mode includes the third mode, and the control unit 2120 is further configured to: when the state of charge corresponding to the third mode cannot enable the third mode to last for a second preset duration, control the range extender to generate power.

Optionally, the state of charge corresponding to the third mode is a second state of charge, and the control unit 2120 is further configured to: when a state of charge consumed in the third mode reaches the second state of charge, control a battery of the vehicle to stop discharging.

Optionally, the obtaining unit 2110 is configured to obtain the information about the destination before the vehicle travels to the destination; and the control unit 2120 is configured to prompt, based on the information about the destination and the state of charge of the vehicle, the user with a state of charge corresponding to an outward trip, the state of charge corresponding to the return trip, and the state of charge corresponding to the first mode.

For example, the obtaining unit 2110 may be the computing platform in FIG. 1 or a processing circuit, a processor, or a controller on the computing platform. For example, the obtaining unit 2110 is the processor 151 on the computing platform, and the processor 151 may obtain the information about the destination.

For another example, the control unit 2120 may be the computing platform in FIG. 1, or a processing circuit, a processor, or a controller on the computing platform. For example, the control unit 2120 is the processor 152 on the computing platform. The processor 152 may plan the state of charge based on the state of charge of the vehicle and the information about the destination, and control a vehicle-mounted display to display the state of charge corresponding to the return trip, a state of charge corresponding to an in-vehicle sleep mode, and a state of charge corresponding to a discharge mode.

Functions implemented by the obtaining unit 2110 and functions implemented by the control unit 2120 may be implemented by different processors, or may be implemented by a same processor. This is not limited in this embodiment of this application.

It should be understood that division into the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units in the apparatus may be implemented in a form of a hardware circuit, and functions of a part or all of the units may be implemented by designing the hardware circuit. The hardware circuit may be understood as one or more processors. For example, in an implementation, the hardware circuit is an ASIC, and functions of a part or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of a part or all of the foregoing units. All the units of the foregoing apparatus may be implemented in a form of software invoked by the processor, or all the units may be implemented in a form of a hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the apparatus may be integrated, or may be implemented independently. In an implementation, these units are integrated together and implemented in a form of a SoC. The SoC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

An embodiment of this application further provides a control apparatus. The apparatus includes a processing unit and a storage unit. The storage unit is configured to store instructions, and the processing unit executes the instructions stored in the storage unit, so that the apparatus is enabled to perform the control method performed in the foregoing embodiments.

Optionally, if the apparatus is located in a vehicle, the processing unit may be the processors 151 to 15n shown in FIG. 1.

An embodiment of this application further provides a control system. The control system may include a computing platform and a prompt apparatus. The computing platform may include the foregoing control apparatus 2100.

For example, the prompt apparatus may include a display apparatus, and the display apparatus may include a vehicle-mounted display, for example, one or more of the display 201, the display 202, the display 203, or the display 204 in FIG. 2.

An embodiment of this application further provides a vehicle. The vehicle may include the foregoing control apparatus 2100 or the foregoing control system.

An embodiment of this application further provides a computer program product. The computer program product includes computer program code. When the computer program code is run on a computer, the computer is enabled to perform the control method in the foregoing embodiments.

An embodiment of this application further provides a computer-readable medium. The computer-readable medium stores program code. When the computer program code is run on a computer, the computer is enabled to perform the control method in the foregoing embodiments.

An embodiment of this application further provides a chip. The chip includes a circuit. The circuit is configured to perform the control method in the foregoing embodiments.

In an implementation process, steps in the foregoing methods can be implemented by using a hardware integrated logic circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. A part or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining information about a destination; and
controlling, based on the information about the destination and a state of charge of a vehicle, a prompt apparatus to prompt a user with a state of charge corresponding to a return trip and a state of charge corresponding to a first mode, wherein
the first mode comprises a second mode related to a user rest in a cockpit of the vehicle and/or a third mode used for discharging the vehicle.

2. The method according to claim 1, wherein the first mode comprises the second mode and the third mode, and controlling, based on the information about the destination and the state of charge of the vehicle, the prompt apparatus to prompt the user with the state of charge corresponding to the return trip and the state of charge corresponding to the first mode comprises:
controlling, based on the information about the destination, the state of charge of the vehicle, and a historical camping record of the user, the prompt apparatus to prompt the user with the state of charge corresponding to the return trip, a state of charge corresponding to the second mode, and a state of charge corresponding to the third mode.

3. The method according to claim 1 or 2, wherein the method further comprises:
when it is detected that the user increases an input of the state of charge corresponding to the second mode, keeping the state of charge corresponding to the return trip unchanged and decreasing the state of charge corresponding to the third mode; or
when it is detected that the user increases an input of the state of charge corresponding to the third mode, keeping the state of charge corresponding to the return trip unchanged and decreasing the state of charge corresponding to the second mode.

4. The method according to claim 1 or 2, wherein the method further comprises:
when it is detected that the user increases an input of the state of charge corresponding to the first mode, decreasing the state of charge corresponding to the return trip; and
when the state of charge corresponding to the return trip cannot enable the vehicle to travel to a charging station closest to the destination, controlling the prompt apparatus to inform the user that the state of charge corresponding to the return trip cannot enable the vehicle to travel to the charging station.

5. The method according to any one of claims 1 to 4, wherein the vehicle comprises a range extender, the first mode comprises the second mode, and the method further comprises:
when the state of charge corresponding to the second mode cannot enable the second mode to last for a first preset duration, controlling the range extender to generate power.

6. The method according to claim 5, wherein controlling the range extender to generate the power comprises:
before the second mode is enabled, controlling the range extender to generate the power.

7. The method according to any one of claims 1 to 6, wherein the state of charge corresponding to the second mode is a first state of charge, and the method further comprises:
when a state of charge consumed in the second mode reaches the first state of charge, exiting the second mode.

8. The method according to claim 7, wherein the method further comprises:
controlling the prompt apparatus to inform the user that the vehicle has exited the second mode; and/or
controlling a vehicle window of the vehicle to be opened.

9. The method according to any one of claims 1 to 8, wherein the vehicle comprises the range extender, the first mode comprises the third mode, and the method further comprises:
when the state of charge corresponding to the third mode cannot enable the third mode to last for a second preset duration, controlling the range extender to generate power.

10. The method according to any one of claims 1 to 9, wherein the state of charge corresponding to the third mode is a second state of charge, and the method further comprises:
when a state of charge consumed in the third mode reaches the second state of charge, controlling the vehicle to stop discharging.

11. The method according to any one of claims 1 to 10, wherein obtaining the information about the destination comprises:
obtaining the information about the destination before the vehicle travels to the destination; and
controlling, based on the information about the destination and the state of charge of the vehicle, the prompt apparatus to prompt the user with the state of charge corresponding to the return trip and the state of charge corresponding to the first mode comprises:
controlling, based on the information about the destination and the state of charge of the vehicle, the prompt apparatus to prompt the user with a state of charge corresponding to an outward trip, the state of charge corresponding to the return trip, and the state of charge corresponding to the first mode.

12. A control apparatus, comprising:
an obtaining unit, configured to obtain information about a destination; and
a control unit, configured to control, based on the information about the destination and a state of charge of a vehicle, a prompt apparatus to prompt a user with a state of charge corresponding to a return trip and a state of charge corresponding to a first mode, wherein
the first mode comprises a second mode related to a user rest in a cockpit of the vehicle and/or a third mode used for discharging the vehicle.

13. The apparatus according to claim 12, wherein the first mode comprises the second mode and the third mode, and the control unit is configured to:
control, based on the information about the destination, the state of charge of the vehicle, and a historical camping record of the user, the prompt apparatus to prompt the user with the state of charge corresponding to the return trip, a state of charge corresponding to the second mode, and a state of charge corresponding to the third mode.

14. The apparatus according to claim 12 or 13, wherein the apparatus further comprises a detection unit and a state-of-charge adjustment unit; and
the state-of-charge adjustment unit is configured to: when the detection unit detects that the user increases an input of the state of charge corresponding to the second mode, keep the state of charge corresponding to the return trip unchanged and decrease the state of charge corresponding to the third mode; or
when the detection unit detects that the user increases an input of the state of charge corresponding to the third mode, keep the state of charge corresponding to the return trip unchanged and decrease the state of charge corresponding to the second mode.

15. The apparatus according to claim 12 or 13, wherein the apparatus further comprises a detection unit and a state-of-charge adjustment unit;
the state-of-charge adjustment unit is configured to: when the detection unit detects that the user increases an input of the state of charge corresponding to the first mode, decrease the state of charge corresponding to the return trip; and
the control unit is further configured to: when the state of charge corresponding to the return trip cannot enable the vehicle to travel to a charging station closest to the destination, control the prompt apparatus to inform the user that the state of charge corresponding to the return trip cannot enable the vehicle to travel to the charging station.

16. The apparatus according to any one of claims 12 to 15, wherein the vehicle comprises a range extender, and the first mode comprises the second mode; and
the control unit is further configured to: when the state of charge corresponding to the second mode cannot enable the second mode to last for a first preset duration, control the range extender to generate power.

17. The apparatus according to claim 16, wherein the control unit is configured to:
before the second mode is enabled, control the range extender to generate the power.

18. The apparatus according to any one of claims 12 to 17, wherein the state of charge corresponding to the second mode is a first state of charge; and
the control unit is further configured to: when a state of charge consumed in the second mode reaches the first state of charge, exit the second mode.

19. The apparatus according to claim 18, wherein the control unit is further configured to:
control the prompt apparatus to inform the user that the vehicle has exited the second mode; and/or
control a vehicle window of the vehicle to be opened.

20. The apparatus according to any one of claims 12 to 19, wherein the vehicle comprises the range extender, the first mode comprises the third mode, and the control unit is further configured to:
when the state of charge corresponding to the third mode cannot enable the third mode to last for a second preset duration, control the range extender to generate power.

21. The apparatus according to any one of claims 12 to 20, wherein the state of charge corresponding to the third mode is a second state of charge, and the control unit is further configured to:
when a state of charge consumed in the third mode reaches the second state of charge, control the vehicle to stop discharging.

22. The apparatus according to any one of claims 12 to 21, wherein the obtaining unit is configured to:
obtain the information about the destination before the vehicle travels to the destination; and
the control unit is configured to:
control, based on the information about the destination and the state of charge of the vehicle, the prompt apparatus to prompt the user with a state of charge corresponding to an outward trip, the state of charge corresponding to the return trip, and the state of charge corresponding to the first mode.

23. A control apparatus, comprising:
a memory, configured to store a computer program; and
a processor, configured to execute the computer program stored in the memory, to enable the apparatus to perform the control method according to any one of claims 1 to 11.

24. A control system, comprising a prompt apparatus and a computing platform, wherein the computing platform comprises the apparatus according to any one of claims 12 to 23.

25. A vehicle, comprising the control apparatus according to any one of claims 12 to 23, or comprising the control system according to claim 24.

26. A computer-readable storage medium, wherein the computer-readable storage medium stores a computer program, and when the computer program is executed by a computer, the control method according to any one of claims 1 to 11 is implemented.

27. A chip, wherein the chip comprises a processor and a data interface, and the processor reads, through the data interface, instructions stored in a memory, to perform the control method according to any one of claims 1 to 11.
